(19) **Europäisches Patentamt European Patent Office Office européen des brevets**

(11) **EP 4 697 785 A1**

(12) **EUROPEAN PATENT APPLICATION**
published in accordance with Art. 153(4) EPC

(43) Date of publication:
**18.02.2026 Bulletin 2026/08**

(21) Application number: **23932473.4**

(22) Date of filing: **13.04.2023**

(51) International Patent Classification (IPC):
**H04W 24/08** (2009.01)

(52) Cooperative Patent Classification (CPC):
**H04W 24/08**

(86) International application number:
**PCT/CN2023/088159**

(87) International publication number:
**WO 2024/212186 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **SHI, Kaidi**
**Dongguan, Guangdong 523860 (CN)**

• **LU, Liuming**
**Dongguan, Guangdong 523860 (CN)**
• **HOU, Ronghui**
**Dongguan, Guangdong 523860 (CN)**
• **LUO, Chaoming**
**Dongguan, Guangdong 523860 (CN)**
• **ZHOU, Pei**
**Dongguan, Guangdong 523860 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **LINK STATE DETERMINATION METHOD, FRAME TRANSMISSION METHOD, APPARATUSES, DEVICE, AND MEDIUM**

(57) Provided are a method for determining link statuses, and a wireless device thereof, which relate to the technical field of communications. The method is performed by a multi-link device (MLD). The method includes: determining a link status of a mmWave link based on whether beamforming training is complete, wherein the link status includes at least one of a first status or a second status.

FIG. 4

## Description

### TECHNICAL FIELD

The present disclosure relates to the technical field of communications, and in particular, relates to a method for determining link statuses, a method for transmitting frames, and apparatuses, devices, and mediums thereof.

### RELATED ART

The mmWave communication is currently a prominent technology. However, the mmWave has significant drawbacks, such as short transmission distance, susceptibility to attenuation, and vulnerability to obstruction. These drawbacks significantly affect communication quality of the mmWave communication.

Therefore, how to effectively improve the communication quality of the mmWave communication is a problem to be addressed.

### SUMMARY

Embodiments of the present disclosure provide a method for determining link statuses, a method for transmitting frames, and apparatuses, devices, and mediums thereof. The technical solutions are as follows.

According to some embodiments of the present disclosure, a method for determining link statuses is provided. The method is performed by a multi-link device (MLD), and includes:

determining a link status of a mmWave link based on whether beamforming training is complete.

According to some embodiments of the present disclosure, an apparatus for determining link statuses is provided. The apparatus includes:

a determining module, configured to determine a link status of a mmWave link based on whether beamforming training is complete.

According to some embodiments of the present disclosure, a method for transmitting frames is provided. The method is performed by an MLD, and includes:

transmitting a first frame on a mmWave link in a first status, wherein the first status indicates that beamforming training has been completed on the mmWave link and at least one traffic identifier (TID) is mapped to the mmWave link in an uplink direction or a downlink direction.

According to some embodiments of the present disclosure, an apparatus for transmitting frames is provided. The apparatus includes:

a transmitting module, configured to transmit a first frame on a mmWave link in a first status, wherein the first status indicates that beamforming training is complete on the mmWave link and at least one TID is mapped to the mmWave link in an uplink direction or a downlink direction.

According to some embodiments of the present disclosure, a wireless device is provided. The wireless device includes: a processor a transceiver communicably connected to the processor and a memory storing one or more instructions executable by the processor. The processor is configured to load and execute the one or more executable instructions to cause the wireless device to perform the method for determining the link statuses or the method for transmitting the frames according to the above embodiments.

According to some embodiments of the present disclosure, a computer-readable storage medium is provided. The computer-readable storage medium stores one or more executable instructions. The one or more executable instructions, when loaded and executed by a processor cause the processor to perform the method for determining the link statuses or the method for transmitting the frames according to the above embodiments.

According to some embodiments of the present disclosure, a computer program product is provided. The computer program product includes one or more computer instructions that are stored in a computer-readable storage medium. The one or more computer instructions, when read and executed by a processor of a computer device, cause the computer device to perform the method for determining the link statuses or the method for transmitting the frames according to the above embodiments.

According to some embodiments of the present disclosure, a chip is provided. The chip includes programmable logic circuitry and/or program instructions. The chip is configured to perform the method for determining the link statuses or the method for transmitting the frames according to the above embodiments.

According to some embodiments of the present disclosure, a computer program is provided. The computer program includes one or more computer instructions. The one or more computer instructions, when read and executed by a processor of a computer device, cause the computer device to perform the method for determining the link statuses or the method for transmitting the frames according to the above embodiments.

The technical solutions according to the embodiments of the present disclosure achieve the following technical effects.

The MLD transmits the frame over the mmWave link in the first status. As the link status of the mmWave link in transmitting the first frame over the mmWave link is defined, the communication quality of the mmWave communication is effectively improved, the failure rate of the mmWave communication is reduced, and the resource waste is mitigated.

**BRIEF DESCRIPTION OF DRAWINGS**

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.

FIG. 1 is a flowchart of a multi-link operation in some practices;
FIG. 2 is a schematic diagram of a wireless-fidelity (Wi-Fi) system according to some embodiments of the present disclosure;
FIG. 3 is a flowchart of a method for transmitting frames according to some embodiments of the present disclosure;
FIG. 4 is a flowchart of a method for transmitting frames according to some embodiments of the present disclosure;
FIG. 5 is a flowchart of a method for determining link statuses according to some embodiments of the present disclosure;
FIG. 6 is a flowchart of a method for transmitting frames according to some embodiments of the present disclosure;
FIG. 7 is a flowchart of a method for determining link statuses according to some embodiments of the present disclosure;
FIG. 8 is a flowchart of a method for transmitting frames according to some embodiments of the present disclosure;
FIG. 9 is a flowchart of a method for transmitting frames according to some embodiments of the present disclosure;
FIG. 10 is a flowchart of a method for determining link statuses according to some embodiments of the present disclosure;
FIG. 11 is a schematic diagram of a format of an element according to some embodiments of the present disclosure;
FIG. 12 is a schematic diagram of a format of an element according to some embodiments of the present disclosure;
FIG. 13 is a schematic diagram of a format of an element according to some embodiments of the present disclosure;
FIG. 14 is a schematic diagram of a format of an element according to some embodiments of the present disclosure;
FIG. 15 is a schematic diagram of a format of an element according to some embodiments of the present disclosure;
FIG. 16 is a schematic diagram of a format of an element according to some embodiments of the present disclosure;
FIG. 17 is a schematic diagram of a format of an element according to some embodiments of the present disclosure;
FIG. 18 is a schematic diagram of a format of an element according to some embodiments of the present disclosure;
FIG. 19 is a flowchart of a method for transmitting frames according to some embodiments of the present disclosure;
FIG. 20 is a schematic diagram of a format of an element according to some embodiments of the present disclosure;
FIG. 21 is a block diagram of an apparatus for transmitting frames according to some embodiments of the present disclosure; and
FIG. 22 is a schematic structural diagram of a wireless communication device according to some embodiments of the present disclosure.

**DETAILED DESCRIPTION**

For clearer descriptions of the objectives, technical solutions, and advantages of the present disclosure, embodiments of the present disclosure are further described in detail below with reference to the accompanying drawings. The exemplary embodiments are described in detail herein, and examples are illustrated in the accompanying drawings. In the following description, when referring to the accompanying drawings, like or similar numbers in different accompanying drawings represent the same or similar elements unless otherwise indicated. The embodiments described in the following exemplary embodiments do not represent all embodiments consistent with the present disclosure. Instead, the illustrated embodiments are merely examples of apparatus and methods consistent with aspects of the present disclosure, as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used herein to describe various pieces of information, and such information should not be limited to these terms. These terms are only used to distinguish one type of information from another. For example, first information may also be referred to as second information, and similarly, second information is also referred to as first information, without departing from the scope of the present disclosure. The word "if," as used herein, may be interpreted as "in a case where," "in a case that," or "in response to determining that," depending on the context. In the description, in describing meanings of Boolean values, a value of "0" represents a "first meaning," and a value of "1" represents a "second meaning." In general, those skilled in the art can understand that actual meanings are reversible, that is, the value of "1" represents the "first meaning," and the value of "0" represents the "second meaning."

For the mmWave link, some people believe that all devices operating in a millimeter frequency band should have multi-link operation (MLO) capabilities. Furthermore, in addition to the station (STA)/access point (AP) in the mmWave frequency band, at least one STA/AP should be affiliated in a low-frequency band, and device association and discovery are conducted in the low-frequency band.

**(1) Some questions to answer for ultra-high reliability (UHR) project authorization request (PAR)**

According to this proposal, the mmWave may provide, for UHR users, an explicit lighthouse function and other functions affecting performance. Moreover, this proposal establishes a new, long-term Wi-Fi roadmap, including other new uses and new functions, and provides new paths for the inherited communication and sensing solutions.

The proposal maintains that it is important to clearly define the scope of mmWave within this generation of UHR, and it is unnecessary to define additional features for further optimization of the UHR. In addition, as specified in the proposal, all devices operating in the mmWave should have the multi-link operation capability, and at least one affiliated STA/AP other than STA/AP in the mmWave frequency band needs to be affiliated in the low-frequency band. Basically, there are no devices that only operate in the mmWave frequency band. Using the mmWave link based on a multi-link operation has many advantages. For example, the device is discovered/associated in the low-frequency band; scheduling is performed from the low-frequency band (e.g., scheduling of a target wake time (TWT) is negotiated in the low-frequency band, and then using a TWT service period (SP) in the mmWave frequency band significantly reduces power consumption as channel contention is almost not required in the mmWave frequency band and the device wakes up during the TWT SP); broadcast exchange is performed in the low-frequency band; sector sweep is performed in beamforming training at 60 GHz, but the sequence is triggered or scheduled in the low-frequency band or is fed back in the low-frequency band; in response to a link disconnection in the 60 GHz link, the link seamlessly and quickly feed back to the low-frequency band (beamforming needs to be reperformed). In other words, all broadcast exchanges and frame exchanges are complete prior to setup and successfully completion of the beamforming training in the mmWave frequency band may be performed in the low-frequency band.

In addition, the differences between the technologies in the Institute of Electrical and Electronics Engineers (IEEE) 802.11ad/ay standard and the technologies supported by the mmWave in the UHR are introduced in the proposal, as listed in Table 1.

Table 1 Comparison between the technologies in the IEEE 802.11ad/ay standard and the technologies supported by the mmWave in the UHR

|  | IEEE 802.11ad/av | mmWave in IEEE 802.11bX/UHR |
|---|---|---|
| (Modem) (PHY/MAC) | Requires development of a dedicated modem SC PHY as primarv modulation | Fully reuses lower band modem OFDM PHY(e.g., 11ac) as primary modulation |
| Management and control | Full control and management in mmWave Support for mmWave onlv devices | Build on MLO framework Exploit lower band for control and management No support for mmWave-onlv devices |
| Channelization | (Base (smallest) channel bandwidth): 2.16 GHz Channel bonding up to 8.64 GHz | Build on lower band channelization (Base (smallest) channel bandwidth could be 80/160/320 MHz) |

**(2) Multi-link operation procedure**

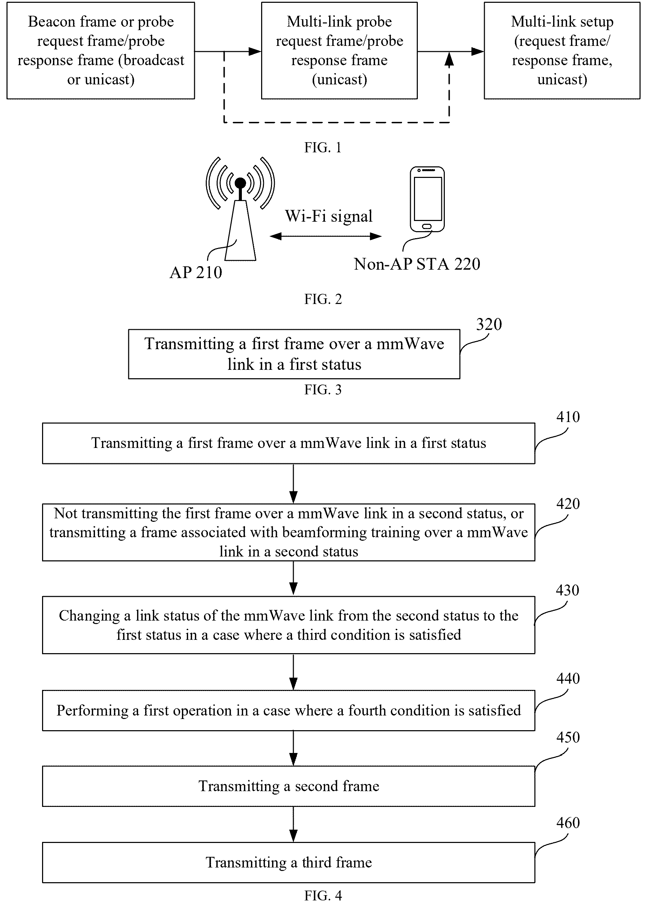

The procedure of the multi-link operation of a non-AP multi-link device (MLD) and an AP MLD mainly includes: an AP MLD discovery stage, a multi-link (re)setup stage, and a TID-to-link mapping stage. FIG. 1 illustrates the flowchart.

The AP MLD discovery stage supports two operation modes, that is, active sweep and passive sweep. The active sweep means that any one of the affiliated STAs in the non-AP MLD broadcasts a probe request frame and receives a probe response frame, to acquire information of nearby AP MLDs. The passive sweep means that one of the affiliated AP STAs in the AP MLD broadcasts a beacon frame carrying complete information therefor and basic information of other affiliated AP STAs. Furthermore, a non-AP STA attached with the non-AP MLD further requests complete or partial functions, parameters, and operation element sets of the AP in the AP MLD via a multi-link probe request frame.

Before multi-link (re)setup by the non-AP MLD and the AP MLD, the non-AP MLD and the AP MLD should follow an MLD authentication process. The non-AP STA affiliated with the non-AP MLD transmits a (re)association request frame to the AP affiliated with the AP MLD, and a requested connection and capabilities and operation parameters of the requested connection in the (re)association request frame. Subsequently, upon receiving the (re)association request frame, the AP MLD indicates the accepted or rejected requested connection and the capabilities and the operation parameters of the requested connection in a (re)association response frame. Upon receiving the (re)multi-link association response frame by the non-AP MLD, the multi-link setup between the non-AP MLD and the AP MLD is complete.

The TID-to-link mapping mechanism mainly aims to enable the AP MLD and the non-AP MLD that have performed or are performing the multi-link setup to determine how to allocate quality of service (QoS) traffic of an uplink (UL) and a downlink (DL) with a TID value ranging from 0 to 7 to an established link of the non-AP MLD. The TID-to-link mapping includes implicit mapping and explicit mapping. In the implicit mapping, the non-AP MLD initiates negotiation of the TID-to-link mapping by carrying a TID-to-link mapping element in the (re)association request frame in the multi-link (re) setup process. The AP MLD receives the (re)association request frame and replies with a response frame. In this case, the AP MLD only accepts the (re)association request frame on the condition that the (re)association request frame includes the multi-link setup in which at least one TID is mapped to at least one link. Otherwise, the (re)association response frame includes recommended TID-to-link mapping. In the explicit mapping, upon the successful multi-link (re)setup and the completion of four handshakes, a TID-to-link request frame may be transmitted and a TID-to-link response frame may be received between an initiator MLD and a responder MLD to negotiate the TID-to-link. Upon the TID-to-link mapping, data transmission may be performed on an enabled link.

**(3) Status of an established link**

The status of the established link includes an enabled status and a disabled status. In a case where at least one TID is mapped to the established link in the DL and the UL, the established link is defined as an enabled link; and in a case where no TID is mapped to the established link in the DL and the UL, the established link is defined as a disabled link.

In the TID-to-link mapping process, in the default mode, all TIDs are mapped to all the established links in the DL and the UL, and all the established links are enabled links. In a case where the negotiation of the TID-to-link mapping for different mappings does not occur, fails, or is interrupted, the non-AP MLD associated with the AP MLD operates in the aforementioned default mode.

**(4) Operations in different link statuses**

In a case where a link status of a link is enabled for the non-AP MLD,

1) the link is used for individually addressed frame exchange, which depends on the status of the power source of the non-AP STA operating on the link. Only the medium access control service data units (MSDUs) or aggregate-MSDUs (A-MSDUs) corresponding to the TIDs mapped to the link are transmitted on the link between the corresponding non-AP STA (belonging to the non-AP MLD) and AP (belonging to the AP MLD) in a direction corresponding to the TID-to-link mapping.
2) individually addressed management frames, QoS null frames, and control frames are transmitted on any enabled link in the DL and the UL between the corresponding non-AP MLD and the AP MLD.

In a case where the link status of the link is disabled for the non-AP MLD, the link is not used for individually addressed frame (including the management frames and the control frames) exchange between the non-AP STA associated with the non-AP MLD and the AP associated with the AP MLD, unless the link status of the link is disabled for the non-AP MLD but is not notified as disabled for the AP MLD. In a case where the non-AP MLD is an initiator device, the link is used for transmission of a type-1 management frame, a type-2 management frame, a type-1 control frame, a TID-to-link mapping request frame, a TID-to-link mapping response frame, and a TID-to-link mapping teardown frame.

**(5) Beaming training in related art 1**

In the related art 1, beamforming training includes a sector-level sweep (SLS) stage, a beam refinement protocol (BRP) stage, and a beam tracking (BT) stage.

The SLS stage includes four stages, that is, an initiator sector sweep (ISS) stage, a responder sector sweep (RSS) stage, a sector sweep feedback (SSW-FB) stage, and a sector sweep acknowledgment (SSW-ACK) stage. The ISS stage is for training an initiator link, and the RSS stage is for training a responder link. The SLS for transmitting a transmitter (TX) is referred to as a TXSS, and SLS for transmitting a receiver (RX) is referred to as an RXSS. In the SLS stage, a beamforming (BF) frame transmitted by the initiator may be a directional multi-gigabit (DMG) beacon frame, a sector sweep (SSW) frame, or an SSW-FB frame; and a BF frame transmitted by the responder may be an SSW frame or an SSW-ACK frame. Finally, the RSS stage includes feedback of an optimal sector (and an optimal antenna) in the ISS stage, and the SSW-FB stage includes feedback of the optimal sector (and the optimal antenna) in the RSS process. In the TXSS stage in the ISS stage, different TX sectors of the initiator transmit a BF (DMG beacon or SSW) frame, and a number of TX sectors is pre-negotiated between STAs. In a case where the responder has a plurality of antennas, the initiator repeats the above processes for each receive antenna of the responder. Subsequently, the responder sets all receive antennas to a quasi-omnidirectional mode to cyclically receive data packets from the transmitting sector from the initiator and measure the data packets. Finally, the responder feeds back an identifier (ID) of the optimal sector (in a case where the initiator also has a plurality of antennas, the responder also needs to feed back the ID of the optimal antenna) in the RSS stage. The RSS stage is similar to the ISS stage. In a case where the TXSS is performed in the ISS stage, the RSS stage includes feedback of the optimal sector (and the optimal antenna) in the ISS stage. In the SSW-FB stage, the SSW-FB is performed upon each RSS stage and is transmitted from the initiator to the responder, and the responder sets the receive antenna to the quasi-omnidirectional antenna mode or the antenna configured by RE upon the ISS RXSS, such that the RE can successfully receive the feedback. In the SSW-ACK stage, the SSW-ACK is performed upon the SSW-FB stage and is transmitted from the responder to the initiator. The ACK is transmitted using the ID of the optimal sector that the responder should use and is fed back in the SSW-FB stage.

The BRP is intended to enable the STA to iteratively train the RX and TX antenna arrays and improve TX antenna configuration and RX antenna configuration. The BRP is applicable regardless of the antenna configuration supported by the STA. The BRP stage includes a BRP setup sub-stage, a multi-sector ID detection (MID) sub-stage, a beam combination (BC) sub-stage, subsets of previous stages, and one or more beam refinement transactions.

Beam tracking is for beamforming training in data transmission to adapt to channel changes between the two SLS/BRP beamforming training stages. In the beam tracking, a Training field including a Channel Estimation field (CEF) and a Short Training field (STF) is appended to a tail of the data packet.

A value 0 of the packet type indicates a BRP-RX packet, and a value 1 of the packet type indicates a BRP-TX packet.

A value 1 of a BT request indicates TX/RX training at the transmitter, and a value 0 of the BT request indicates TX/RX training at the receiver.

In an interaction process of requesting the TRN-R by the initiator the transmitter appends a TRN-R field to the tail of the current data packet, the receiver employs a beam tracking method for discovering the optimal receiving sector the initiator transmits the request, and the responder appends the TRN-R field to the tail of the data to train the RX of the initiator.

## (6) Beaming training in related art 2

In the related art 2, the beamforming training process includes three stages, that is, a quasi-omnidirectional beamforming training stage, a sector-level beamforming training stage, and a beam-level beamforming training stage. The three stages correspond to different beamforming regions. Directional gains of the quasi-omnidirectional beamforming training stage, the sector-level beamforming training stage, and the beam-level beamforming training stage increase successively, and coverages thereof decrease successively. The optimal beam is discovered using the wide-to-narrow beam search method, which is detailed as follows.

1) Sub contention access period (S-CAP) and association

Assuming that a piconet controller (PNC) has $P_{TA}$ transmit antennas and $P_{RA}$ receive antennas, then the PNC is transmitted and received respectively in the $P_{TA}$ and $P_{RA}$ directions. Similarly, a device has $D_{TA}$ transmit antennas and $D_{RA}$ receive antennas.

Illustratively, the PNC transmits quasi-omnidirectional (Q-omni) beacon frames for $P_{TA}$ times using one of the $P_{TA}$ antennas, and the process is repeated each time, such that devices at different angle directions join the same PNC. The device monitors the quasi-omnidirectional beacon frames in $D_{RA}$ directions based on a link quality indicator (e.g., a signalto-noise ratio) to discover an optimal direction pair and a suboptimal direction pair. Before determining the optimal direction pair and the suboptimal direction pair, the device at least compares $P_{TA} \times D_{RA}$ direction pairs. Finally, the device informs the PNC of the optimal transmission direction in an association command transmitted in the S-CAP period. Since the device does not know the optimal S-CAP, the device transmits an association request command on different antennas in the association S-CAP period, until the PNC responds to an association response command.

2) Beam discovery

As the antenna direction pair discovered in the association stage may not be optimal, two-stage beam discovery, including coarse-level beam discovery and fine-level beam discovery, is performed in a non-contention period within channel time allocation (CTA).

Illustratively, upon selection of an optimal coarse-level beam pair, an optimal narrow beam pair is finally selected in the fine-level beam discovery. The PNC has $P_{TB}$ transmit beams and $P_{RB}$ receive beam, and thus may transmit and receive data respectively in the $P_{TB}$ and $P_{RB}$ directions. Similarly, a device has $D_{TR}$ transmit beams and $D_{RB}$ receive beams. The CTA is used for PNC-to-device beam discovery and feedback, and similar processes from the device to the PNC.

Illustratively, the PNC-to-device beam discovery includes $P_{TB}$ periods, and the PNC repeats transmitting $D_{RB}$ training sequences in the same direction in each period. In each period, the device attempts to receive the training sequence by switching $D_{RB}$ beams. Upon all $P_{TB}$ cycles, the device has tested all possible $P_{TB} \times D_{RB}$ combinations. On this basis, the device selects the optimal beam pair, that is, the optimal transmit beam $P_{TB}^*$ of the PNC and the optimal receive beam of the device, and feeds back the information to the PNC. Similar processes are performed by the device as the transmitter of the training sequence and the PNC as the receiver of the training sequence. Then, the PNC selects the optimal beam pair, that is, the optimal transmit beam $D_{TB}^*$ of the device and the optimal receive beam $P_{RB}^*$ of the PNC. Finally, the mapping process is performed, information of the fine-level beam in the discovered optimal beam pair is exchanged. In the second stage, a similar method is used to select the optimal fine-level beam pair.

3) Beam tracking: rapid movements do not occur frequently in typical home and office environments, and a wireless channel experiences very slow fading in many situations. In this case, the optimal beam discovery from the current data packet to the next data packet does not change significantly. Therefore, the time-consumed beam discovery process is not frequently invoked. The beam tracking is for addressing the slow channel fading. The beam tracking takes much less time than the beam discovering process because the optimal fine-level beam pair is selected from the discovered coarse-level beam pair in the beam tracking. Thus, the beam tracking is periodically performed within the lifecycle of the data transmission.

However, the attenuation caused by factors such as free-space loss of the mmWave, material penetration, and human obstruction are more severe than the attenuation at the sub-7 GHz frequency band. The beamforming training is not performed in the above methods, such that no relatively optimal parameter is available for transmission, and the cost waste and channel occupation are caused by the failure of transmission of the established mmWave link.

Based on the problems, the present disclosure provides a method for determining link statuses and a method for transmitting frames to address these problems.

FIG. 2 is a schematic diagram of a Wi-Fi system according to some embodiments of the present disclosure. The Wi-Fi system includes terminal devices, or a terminal device and a network device, or an AP and an STA, which is not limited in the present disclosure. In the present disclosure, the Wi-Fi system is illustrated as including AP 210 and STA 220.

In some scenarios, the AP is also referred to as an AP STA, that is, the AP is also a type of STA.

In some embodiments, an STA may refer to an AP STA or a non-AP STA.

The communications within the Wi-Fi system involve communications between an AP and a non-AP STA, communications between non-AP STAs, or communications between an STA and a peer STA. The peer STA refers to a device in a peer communication with an STA. For example, the peer STA may be an AP or a non-AP STA.

The AP functions as a bridge connecting the wired network and the wireless network, and mainly functions to connect various wireless network clients and then access the wireless network to the Ethernet. AP devices may be terminal devices or network devices equipped with Wi-Fi chips.

It should be understood that the role of the STA in the communication system is not absolute. For example, in some scenarios, in a case where a mobile phone is connected to a router, the mobile phone is a non-AP STA. However, in a case where the mobile phone serves as a hotspot for other mobile phones, the mobile phone is an AP.

Both the AP and the non-AP STA may be devices applied in the Internet of vehicles, Internet of things (IoT) nodes and sensors in the IoT, smart cameras, smart remotes, smart water meters, and electricity meters in smart homes, and sensors in smart cities.

In some embodiments, the non-AP STA supports various current and future WLAN standards of the 802.11 family, such as 802.11be, 802.11ax, 802.11ac, 802.11n, 802.11g, 802.11b, and 802.11a. The non-AP STA is also appliable to network environments that support next-generation WLAN systems. The next-generation WLAN system is an evolved WLAN system from the 802.11ax system and satisfies backward compatibility with the 802.11ax system. The next-generation Wi-Fi communication is any new-generation Wi-Fi communication after the Wi-Fi 7 based on the IEEE 802.11be specification, for example, extremely high throughput (EHT) communications, UHR communications. For example, a non-AP STA is a UHR STA.

In some embodiments, the AP is a device that supports various current and future WLAN standards of the 802.11 family, such as 802.11ax, 802.11ac, 802.11n, 802.11g, 802.11b, and 802.11a. The AP is also appliable to network environments that support next-generation WLAN systems. The next-generation WLAN system is an evolved WLAN system from the 802.11ax system and satisfies backward compatibility with the 802.11ax system. The next-generation Wi-Fi communication is any new-generation Wi-Fi communication after the Wi-Fi 7 based on the IEEE 802.11be specification, for example, extremely high throughput (EHT) communications, UHR communications. For example, an AP is a UHR AP.

In the embodiments of the present disclosure, the STA may be devices that support the WLAN/Wi-Fi technology, such as mobile phones, pads, e-book readers, laptop computers, desktop computers, televisions, virtual reality (VR) devices, augmented reality (AR) devices, extended reality (XR) device, baffle reality (BR) devices, cinematic reality (CR) devices, deceive reality (DR) devices, industrial control wireless devices, set-top boxes, self-driving wireless devices, in-vehicle communication devices, wireless devices in remote medical applications, wireless devices in smart grids, wireless devices in transportation safety, wireless devices in smart cities, wireless devices in smart homes, wireless communication chips, application specific integrated circuits (ASICs), system-on-chip (SoC), and the like.

Bands supported by the Wi-Fi system in the embodiments of the present disclosure include, but are not limited to, mmWave frequency bands (e.g., 45 GHz, 60 GHz, and other frequency bands from 30 GHz to 300 GHz) and a sub-7 GHz band (e.g., 2.4 GHz, 5 GHz, 6 GHz, and other frequency bands from 1 GHz to 7.25 GHz).

One or more links are present between the STA and the AP.

In some embodiments, the STA and the AP support multi-band communications, such as simultaneous communications at 2.4 GHz, 5 GHz, 6 GHz, 45 GHz, and 60 GHz frequency bands, or simultaneous communications in different channels of the same frequency band or different channels of different frequency bands, such that the communication throughput and/or reliability between devices are improved. Such devices are often referred to as multi-frequency-band devices, or MLDs, and are also referred to as multi-frequency-band entities or multi-link entities. The MLD may be an AP device or a non-AP STA device. In a case where the MLD is an AP device, one or more APs are included in the MLD; and in a case where the MLD is a non-AP STA, one or more non-AP STAs are included in the MLD.

The MLD including one or more APs is also referred to as an AP, and the MLD including one or more non-AP STAs is also referred to as a non-AP. In the embodiments of the present disclosure, the non-AP is also referred to as an STA.

In the embodiments of the present disclosure, the STA is present in a form of one or more basic service sets (BSSs). The BSS is a set of STAs that are synchronous for communication with each other. The BSS includes an AP or does not include an AP.

In the embodiments of the present disclosure, the AP includes a plurality of APs, the non-AP includes a plurality of STAs, a plurality of links are formed between the APs in the AP and the STAs in the non-AP, and data communication is performed between the APs in the AP and the corresponding STAs in the non-AP over the corresponding links.

In some embodiments, the AP is a device deployed in the WLAN/Wi-Fi system to provide a wireless communication function for the STA. The STA includes a user equipment (UE), an access terminal, a subscriber unit, a subscriber station, a rover station, a mobile station, a remote station, a remote terminal, a mobile device, a wireless communication device, a user agent, or a user apparatus. In some embodiments, the STA is a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, an in-vehicle device, or a wearable device, which is not limited in the embodiments of the present disclosure.

In the embodiments of the present disclosure, both the AP and the non-AP STA support the IEEE 802.11 standard, but not limited to the IEEE 802.11 standard.

FIG. 3 is a flowchart of a method for transmitting frames according to some embodiments of the present disclosure. Using an example where the method is performed by an MLD, the method includes the following process.

**In S320,** a first frame is transmitted over a mmWave link in a first status.

In the present disclosure, the MLD includes at least one of an AP MLD or a non-AP MLD. The AP MLD includes one or more APs that support MLO capabilities, and the non-AP MLD includes one or more non-AP STAs that support the MLO capabilities. The AP in AP MLD is also referred to as an AP affiliated with the AP MLD. Similarly, a non-AP STA in the non-AP MLD is also referred to as a non-AP STAs affiliated with the non-AP MLD.

Hereinafter, the terms "AP" and "AP STA" are used interchangeably, as are the terms "Non-AP" and "Non-AP STA". Furthermore, the term "STA", when used alone, may refer to an AP STA, a Non-AP STA, or both.

At least two links are present between the AP MLD and the non-AP MLD. That is, the AP MLD and the non-AP MLD operate on at least two links concurrently. The at least two links are in the same frequency band, for example, a low-frequency band or an mmWave frequency band. Alternatively, the at least two links are in different frequency bands, for example, at least one link is in the low-frequency band, and at least another link is in the mmWave frequency band.

In the present disclosure, the at least two links between the AP MLD and the non-AP MLD include at least one mmWave link and at least one non-mmWave link. That is, at least one of the at least two links between the AP MLD and the non-AP MLD operates in the mmWave frequency band, and at least another of the at least two links between the AP MLD and the non-AP MLD operates in the non-mmWave frequency band. The mmWave link is a link operating in the mmWave frequency band, and the link operating at the non-mmWave frequency band is referred to as a non-mmWave link.

The non-mmWave frequency band is a frequency band other than the mmWave frequency band, for example, the sub-7 GHz frequency band, or a new frequency band different from the mmWave frequency band in further plan, which is not limited in the present disclosure.

Transmission includes reception and sensing. For example, transmitting the first frame means at least one of transmitting the first frame or receiving the first frame.

The mmWave link is in the first status, that is, the link status of the mmWave link is the first status.

Transmitting the first frame over the mmWave link in the first status means that the mmWave link in the first status is configured to transmit the first frame or supports transmission of the first frame.

In some embodiments, the first status indicates that beamforming training has been completed on the mmWave link and at least one TID is mapped to the mmWave link in an uplink direction or a downlink direction.

In some embodiments, the beamforming training includes at least one of an SLS stage, a BR stage, or a BT stage. The beamforming training has been completed, that is, at least one of the SLS stage, the BR stage, or the BT stage has been completed. It should be understood that the beamforming training may include other stages that may be designed in the future and are different from the SLS stage, the BR stage, and the BT stage, or other stages designed based on the SLS stage, the BR stage, and the BT stage, which is not limited in the present disclosure.

In some embodiments, the beamforming training includes at least one of a quasi-omnidirectional beamforming training stage, a sector-level beamforming training stage, or a beam-level beamforming training stage. The beamforming training has been completed, that is, at least one of the quasi-omnidirectional beamforming training stage, the sector-level beamforming training stage, or the beam-level beamforming training stage has been completed. It should be understood that the beamforming training may include other stages that may be designed in the future and are different from the quasi-omnidirectional beamforming training stage, the sector-level beamforming training stage, and the beam-level beamforming training stage, or other stages designed based on the quasi-omnidirectional beamforming training stage, the sector-level beamforming training stage, and the beam-level beamforming training stage, which is not limited in the present disclosure.

In some embodiments, the beamforming training includes at least one of an SLS stage, a BR stage, a BT stage, a quasi-omnidirectional beamforming training stage, a sector-level beamforming training stage, or a beam-level beamforming training stage.

In some embodiments, the beamforming training has been completed, that is, an entire beamforming training process is complete, which is complete beamforming training for short. The stage or stages in the complete beamforming training process is determined based on actual cases, equipment capabilities, communication protocols, and the like, which is not limited in the present disclosure. Illustratively, completion of the beamforming training means completion of the SLS and the BR stage; completion of the beamforming training means completion of the SLS stage, the BR stage, and the BT stage; completion of the beamforming training means completion of the quasi-omnidirectional beamforming training stage, the sector-level beamforming training stage, and the beam-level beamforming training stage; or completion of the beamforming training means completion of the sector-level beamforming training stage and the beam-level beamforming training stage, and the like.

In some embodiments, the beamforming training has been completed, that is, part of the beamforming training process is complete, which is partial beamforming training for short. The stage or stages in the partial beamforming training process is determined based on actual cases, equipment capabilities, communication protocols, and the like, which is not limited in the present disclosure. Illustratively, completion of the beamforming training means completion of the SLS; completion of the beamforming training means completion of the BR stage; completion of the beamforming training means completion of the SLS and the BR stage; completion of the beamforming training means completion of the beam-level beamforming training stage; or completion of the beamforming training means completion of the quasi-omnidirectional beamforming training stage and the sector-level beamforming training stage, and the like.

Some embodiments of the present disclosure are illustrated using an example where completion of the beamforming training is completion of the entire beamforming training, but are not limited in this. That is, in some embodiments of the present disclosure, completion of the beamforming training may be completion of the entire beamforming training and completion of the partial beamforming training.

In some embodiments, the first status further indicates at least one of following items: the mmWave link has been established, beamforming has been completed on the mmWave link, TID-to-link mapping has been completed on the mmWave link, or the mmWave link satisfies a communication requirement between two MLDs corresponding to the mmWave link.

The communication requirement is indicated by at least one of a received signal strength indicator (RSSI) value, a packet loss rate, a retransmission rate, a number of packet losses, a number of retransmissions, or a number of transmission failures. Illustratively, the communication requirement is indicated by an RSSI threshold. The communication requirement may be default, predefined by the communication protocol, negotiated by the two MLDs, or determined by one of the two MLDs.

The two MLDs corresponding to the mmWave link are two MLDs connected by the mmWave link. That is, the two MLDs are in communication with each other over the mmWave link. The mmWave link satisfies the communication requirement between the two MLDs. That is, the RSSI value corresponding to the mmWave link reaches the RSSI threshold between the two MLDs.

In some embodiments, the first frame includes at least one of a management frame, a QoS null frame, a control frame, or a data frame.

In summary, in the method according to the present disclosure, the MLD transmits the frame over the mmWave link in the first status. As the link status of the mmWave link in transmitting the first frame over the mmWave link is defined, the communication quality of the mmWave communication is effectively improved, the failure rate of the mmWave communication is reduced, and the resource waste is mitigated.

FIG. 4 is a flowchart of a method for transmitting frames according to some embodiments of the present disclosure. Using an example where the method is performed by an MLD, the method includes at least part of the following processes.

**In S410,** a first frame is transmitted on a mmWave link in a first status.

In the present disclosure, the MLD includes at least one of an AP MLD or a non-AP MLD. The AP MLD includes one or more APs that support the MLO capability, and the non-AP MLD includes one or more non-AP STAs that support the MLO capability. The AP in AP MLD is also referred to as an AP affiliated with the AP MLD. Similarly, a non-AP STA in the non-AP MLD is also referred to as a non-AP STAs affiliated with the non-AP MLD.

The AP and the AP STA have the same meaning, and the non-AP and the non-AP STA have the same meaning. The STA may represent at least one of the AP STA or the non-AP STA.

At least two links are present between the AP MLD and the non-AP MLD. That is, the AP MLD and the non-AP MLD operate on at least two links concurrently. The at least two links are at the same frequency band, for example, the low-frequency band or the mmWave frequency band. Or the at least two links are at different frequency bands, for example, at least one link is in the low-frequency band, and another at least one link is in the mmWave frequency band.

In the present disclosure, at least two links between the AP MLD and the non-AP MLD include at least one mmWave link and at least one non-mmWave link. That is, at least one of the at least two links between the AP MLD and the non-AP MLD operates in the mmWave frequency band, and another at least one of the at least two links between the AP MLD and the non-AP MLD operates in the non-mmWave frequency band. The mmWave link is a link operating in the mmWave frequency band, and the link operating at the non-mmWave frequency band is referred to as a non-mmWave link.

The non-mmWave frequency band is frequency bands other than the mmWave frequency band, for example, the sub-7 GHz frequency band, or new frequency bands different from the mmWave frequency band in further plan, which is not limited in the present disclosure.

Transmission includes reception and sensing. For example, transmitting the second frame means at least one of transmitting the second frame or receiving the second frame.

The mmWave link is in the first status, that is, the link status of the mmWave link is the first status.

Transmitting the first frame over the mmWave link in the first status means that the mmWave link in the first status is configured to transmit the first frame or supports transmission of the first frame.

In some embodiments, the first status indicates that beamforming training has been completed on the mmWave link and at least one TID is mapped to the mmWave link in an uplink direction or a downlink direction.

In some embodiments, the beamforming training has been completed, that is, a complete beamforming training process is complete, which is complete beamforming training for short. The stage or stages in the complete beamforming training process is determined based on actual cases, equipment capabilities, communication protocols, and the like, which is not limited in the present disclosure. Illustratively, completion of the beamforming training means completion of the SLS and the BR stage; completion of the beamforming training means completion of the SLS stage, the BR stage, and the BT stage; completion of the beamforming training means completion of the quasi-omnidirectional beamforming training stage, the sector-level beamforming training stage, and the beam-level beamforming training stage; or completion of the beamforming training means completion of the sector-level beamforming training stage and the beam-level beamforming training stage, and the like.

In some embodiments, the beamforming training has been completed, that is, part of the beamforming training process is complete, which is partial beamforming training for short. The stage or stages in the partial beamforming training process is determined based on actual cases, equipment capabilities, communication protocols, and the like, which is not limited in the present disclosure. Illustratively, completion of the beamforming training means completion of the SLS; completion of the beamforming training means completion of the BR stage; completion of the beamforming training means completion of the SLS and the BR stage; completion of the beamforming training means completion of the beam-level beamforming training stage; or completion of the beamforming training means completion of the quasi-omnidirectional beamforming training stage and the sector-level beamforming training stage, and the like.

In some embodiments, the first status further indicates at least one of following items: the mmWave link has been established, beamforming has been completed on the mmWave link, TID-to-link mapping has been completed on the mmWave link, or the mmWave link satisfies a communication requirement between two MLDs corresponding to the mmWave link.

The communication requirement is indicated by at least one of an RSSI value, a packet loss rate, a retransmission rate, a number of packet losses, a number of retransmissions, or a number of transmission failures. Illustratively, the communication requirement is indicated by an RSSI threshold. The communication requirement may be default, predefined by the communication protocol, negotiated by the two MLDs, or determined by one of the two MLDs.

The two MLDs corresponding to the mmWave link are two MLDs connected by the mmWave link. That is, the two MLDs are communicated with each other via the mmWave link. The mmWave link satisfies the communication requirement between the two MLDs. That is, the RSSI value corresponding to the mmWave link reaches the RSSI threshold between the two MLDs.

In some embodiments, the first frame includes at least one of a management frame, a QoS null frame, a control frame, or a data frame.

In some embodiments, the first status is an enabled status or an enabled on usable status.

**In S420,** the first frame is not transmitted over the mmWave link in a second status, or a frame associated with the beamforming training is transmitted on a mmWave link in a second status.

The first frame is not transmitted over the mmWave link in the second status, that is, the mmWave link in the second status is not configured to transmit the first frame or does not support transmission of the first frame.

In some embodiments, the second status indicates that the beamforming training is not complete on the mmWave link and/or no TID is mapped to the mmWave link in the uplink direction or the downlink direction.

In some embodiments, the beamforming training is not complete, that is, a complete beamforming training process is not complete, which is incompletion of complete beamforming training for short. The stage or stages in the incomplete beamforming training process is determined based on actual cases, equipment capabilities, communication protocols, and the like, which is not limited in the present disclosure. Illustratively, incompletion of the beamforming training means incompletion of the SLS and the BR stage; incompletion of the beamforming training means incompletion of the SLS stage, the BR stage, and the BT stage; incompletion of the beamforming training means incompletion of the quasi-omnidirectional beamforming training stage, the sector-level beamforming training stage, and the beam-level beamforming training stage; or incompletion of the beamforming training means incompletion of the sector-level beamforming training stage and the beam-level beamforming training stage, and the like.

In some embodiments, the beamforming training is not complete, that is, part of the beamforming training process is not complete, which is incompletion of partial beamforming training for short. The stage or stages in the partial beamforming training process is determined based on actual cases, equipment capabilities, communication protocols, and the like, which is not limited in the present disclosure. Illustratively, incompletion of the beamforming training means incompletion of the SLS; incompletion of the beamforming training means incompletion of the BR stage; incompletion of the beamforming training means incompletion of the SLS and the BR stage; incompletion of the beamforming training means incompletion of the beam-level beamforming training stage; or incompletion of the beamforming training means incompletion of the quasi-omnidirectional beamforming training stage and the sector-level beamforming training stage, and the like.

In some embodiments, the second status further indicates at least one of following items: the mmWave link is not established, beamforming is not complete on the mmWave link, TID-to-link mapping is not complete on the mmWave link, a link quality of the mmWave link is less than a first threshold, or the mmWave link does not satisfy a communication requirement between two MLDs corresponding to the mmWave link.

The mmWave link does not satisfy the communication requirement between two MLDs, that is, the RSSI value corresponding to the mmWave link does not reach the RSSI threshold between the two MLDs.

In some embodiments, the first status is the enabled status, and the second status is the non-enabled status. For example, the non-enabled status includes a disabled status. Some embodiments of the present disclosure are illustrated using an example where the non-enabled status is the disabled status.

In some embodiments, the first status is the enabled on usable status, and the second status is the non-enabled on usable status. For example, the non-enabled on usable status includes an enabled on unusable status. Some embodiments of the present disclosure are illustrated using an example where the non-enabled on usable status is the enabled on unusable status.

In some embodiments, in a case where the first status is the enabled status, TID-to-link mapping of the mmWave link is not performed in a setup stage of the mmWave link; and/or TID-to-link mapping of the mmWave link is performed in a case where the mmWave link has been established and the beamforming training has been completed.

In some embodiments, in a case where the first status is the enabled status, TID-to-link mapping of the mmWave link is not performed in a setup stage of the mmWave link; and/or TID-to-link mapping of the mmWave link is performed, and at least one TID is mapped to or is ensured to being mapped to the mmWave link in a case where the mmWave link has been established and the beamforming training has been completed.

In some embodiments, in a case where the first status is the enabled status, and the beamforming training has been completed on the mmWave link, the link status of the mmWave link is determined as the enabled on usable status.

**In S430,** the link status of the mmWave link changes from the second status to the first status in a case where a first condition is satisfied.

In some embodiments, the first condition includes at least one of following items: the second status remains for a first duration, or a link quality of the mmWave link is greater than a second threshold.

**In S440,** a first operation is performed in a case where a second condition is satisfied.

In some embodiments, the second condition includes at least one of following items: the second status remains for a second duration, or a link quality of the mmWave link is less than a third threshold.

The second duration is the same as or different from the first duration.

In some embodiments, the first operation includes at least one of: reperforming the beamforming training on the mmWave link; reperforming beamforming on the mmWave link; rediscovering another MLD, wherein another MLD refers to an MLD other than the MLD performing S440, and may include at least one of the AP MLD or the non-AP MLD; or reestablishing the mmWave link.

**In S450,** a second frame is transmitted.

The second frame is transmitted over the mmWave link or a link other than the mmWave link.

The second frame is configured for use in at least one of a multi-link discovery stage, a multi-link association stage, or a multi-link reassociation stage.

The second frame includes a field indicating mmWave capabilities of at least one of an AP or an STA.

In some embodiments, a basic multi-link element in the second frame includes a first subelement. The first subelement indicates STA profile information.

In some embodiments, a first field in the first subelement includes a first sub-field and a second sub-field.

The first sub-field includes at least one of a field indicating STA control information or a field indicating STA information, the first sub-field indicates that mmWave access point (AP) STA capability information is present, and the second sub-field indicates the mmWave AP STA capability information.

In some embodiments, the second frame includes a second subelement. The second subelement indicates mmWave STA profile information.

In some embodiments, the second subelement includes at least one of an Element Identifier field, a Length field, an STA Control Information field, an STA Information field, or an STA Profile Information field.

In some embodiments, at least one of the STA Control Information field or the STA Information field includes a first sub-field and a second sub-field.

The first sub-field indicates that mmWave AP STA capability information is present, and the second sub-field indicates the mmWave AP STA capability information.

In some embodiments, the second frame carries at least one of the first subelement or a second subelement.

At least one of the first subelement or the second subelement carries a third subelement, wherein the third subelement indicates AP STA mmWave capabilities information.

In some embodiments, the third subelement carries at least one of an Element Identifier field, a Length field, an Element Identifier Extension field, or an AP STA mmWave Capabilities Information field.

In some embodiments, the AP STA mmWave Capabilities Information field carries at least one of a Maximum Associated mmWave STA Number field, a Power Source field, or a Reserved field.

In some embodiments, the second frame includes at least one of an Element Identifier field, a Length field, an Element Identifier Extension field, or a non-access point (AP) STA mmWave Capabilities Information field.

In some embodiments, the non-AP STA mmWave Capabilities Information field includes at least one of: a Reverse Direction sub-field, a Higher Layer Timer Synchronization sub-field, a Transmission Power Control sub-field, a Number of Receive mmWave Antennas sub-field, a Fast Link Adaptation sub-field, a Total Number of Sectors sub-field, a mmWave Antenna Reciprocity sub-field, an Aggregate-Medium Access Control (MAC) Protocol Data Unit (A-MPDU) Parameters sub-field, a Black Acknowledgment (BA) with Flow Control sub-field, a Supported Modulation and Coding Scheme (MCS) Set sub-field, an Aggregate-Physical Protocol Date Unit (A-PPDU) sub-field, an Antenna Direction Pattern Reciprocity sub-field, or a Grant Ack Supported sub-field.

**In S460,** a third frame is transmitted.

The third frame is transmitted over the mmWave link or a link other than the mmWave link. The link other than the mmWave link is a non-mmWave link.

The third frame is configured for use in at least one of a multi-link setup stage, a multi-link association stage, or a multi-link reassociation stage.

The third frame includes a field indicating parameters related to the beamforming training.

A basic multi-link element in the third frame includes a first subelement, wherein the first subelement indicates STA profile information.

In some embodiments, the third frame carries a second subelement, wherein the second subelement indicates mmWave STA profile information.

In some embodiments, a first field in at least one of the first subelement or a second subelement includes a third sub-field and a fourth sub-field.

The first field includes at least one of a field indicating STA control information or a field indicating STA information, the third sub-field indicates that sector sweep parameter information is present, and the fourth sub-field indicates the sector sweep parameter information.

In some embodiments, the fourth sub-field includes a Direction field, a Count Down field, a Sector Identifier field, an Antenna Identifier field, a Receiver Length field, or a Reserved field.

In summary, in the method according to the present disclosure, the link status of the mmWave link in transmitting the first frame over the mmWave link is defined, such that the communication quality of the mmWave communication is effectively improved, the failure rate of the mmWave communication is reduced, and the resource waste is mitigated. In addition, use of the mmWave link is further supported by transmitting the second frame and the third frame, such that the MLD acquires the mmWave capabilities information through the second frame and information related to the beamforming through the third frame. Thus, the stability and flexibility of the use of mmWave link are improved, the spectrum utilization rate is improved, and the resource waste is mitigated. In addition, the designs of the frame formats used in various stages of the multi-link operation are provided to offer feasibility for negotiation, setup, and status change of the mmWave link.

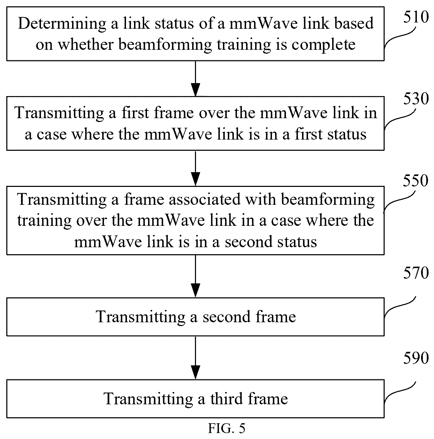

FIG. 5 is a flowchart of a method for determining link statuses according to some embodiments of the present disclosure. Using an example where the method is performed by an MLD, the method includes at least part of the following processes.

**In S510,** a link status of a mmWave link is determined based on whether beamforming training is complete.

In the present disclosure, the beamforming training includes at least one of an SLS stage, a BR stage, or a BT stage. The beamforming training has been completed, that is, at least one of the SLS stage, the BR stage, or the BT stage has been completed.

In some embodiments, the beamforming training has been completed, that is, a complete beamforming training process is complete. Illustratively, completion of the beamforming training means completion of the SLS and the BR stage; or completion of the beamforming training means completion of the SLS stage, the BR stage, and the BT stage.

In some embodiments, the beamforming training has been completed, that is, part of the beamforming training process is complete. Illustratively, completion of the beamforming training means completion of the SLS; completion of the beamforming training means completion of the BR stage; or completion of the beamforming training means completion of the SLS and the BR stage.

In some embodiments, the beamforming training is not complete, that is, a complete beamforming training process is not complete. Illustratively, incompletion of the beamforming training means incompletion of the SLS and the BR stage; or incompletion of the beamforming training means incompletion of the SLS stage, the BR stage, and the BT stage.

In some embodiments, the beamforming training is not complete, that is, part of the beamforming training process is not complete. Illustratively, incompletion of the beamforming training means incompletion of the SLS; incompletion of the beamforming training means incompletion of the BR stage; or incompletion of the beamforming training means incompletion of the SLS and the BR stage.

In some embodiments, the link status of the mmWave link is determined based on whether the beamforming training is complete.

In some embodiments, the link status of the mmWave link is determined based on whether the beamforming training is complete and whether a communication requirement between two MLDs corresponding to the mmWave link is satisfied.

The communication requirement is indicated by at least one of an RSSI value, a packet loss rate, a retransmission rate, a number of packet losses, a number of retransmissions, or a number of transmission failures. Illustratively, the communication requirement is indicated by an RSSI threshold. The communication requirement may be default, predefined by the communication protocol, negotiated by the two MLDs, or determined by one of the two MLDs.

The two MLDs corresponding to the mmWave link are two MLDs connected by the mmWave link. That is, the two MLDs are communicated with each other via the mmWave link. The mmWave link satisfies the communication requirement between the two MLDs, that is, the RSSI value corresponding to the mmWave link reaches the RSSI threshold between the two MLDs. The mmWave link does not satisfy the communication requirement between the two MLDs, that is, the RSSI value corresponding to the mmWave link does not reach the RSSI threshold between the two MLDs.

In some embodiments, the link status includes at least one of a first status or a second status.

In some embodiments, the first status is the enabled status, and the second status is the non-enabled status. For example, the non-enabled status includes a disabled status.

In some embodiments, the link status of the mmWave link is determined as the first status in a case where the beamforming training has been completed on the mmWave link and at least one TID is mapped to the mmWave link in an uplink direction or a downlink direction; or

the link status of the mmWave link is determined as the first status in a case where the beamforming training has been completed on the mmWave link, a communication requirement between two MLDs corresponding to the mmWave link is satisfied, and at least one TID is mapped to the mmWave link in an uplink direction or a downlink direction.

In some embodiments, the link status of the mmWave link is determined as the first status in a case where the beamforming training has been completed on the mmWave link, TID-to-link mapping is complete on the mmWave link, and at least one TID is mapped to the mmWave link in the uplink direction or the downlink direction;

the link status of the mmWave link is determined as the first status in a case where the mmWave link has been established, the beamforming training has been completed on the mmWave link, TID-to-link mapping is complete on the mmWave link, and at least one TID is mapped to the mmWave link in the uplink direction or the downlink direction;

the link status of the mmWave link is determined as the first status in a case where the beamforming training has been completed on the mmWave link, the communication requirement between the two MLDs corresponding to the mmWave link is satisfied, TID-to-link mapping is complete on the mmWave link, and at least one TID is mapped to the mmWave link in the uplink direction or the downlink direction; or

the link status of the mmWave link is determined as the first status in a case where the mmWave link has been established, the beamforming training has been completed on the mmWave link, the communication requirement between the two MLDs corresponding to the mmWave link is satisfied, TID-to-link mapping is complete on the mmWave link, and at least one TID is mapped to the mmWave link in the uplink direction or the downlink direction.

In some embodiments, the link status of the mmWave link is determined as the second status in a case where the beamforming training is not complete on the mmWave link and/or no traffic identifier (TID) is mapped to the mmWave link in an uplink direction or a downlink direction; or

the link status of the mmWave link is determined as the second status in a case where the beamforming training is not complete on the mmWave link, a communication requirement between two MLDs corresponding to the mmWave link is not satisfied, and no TID is mapped to the mmWave link in an uplink direction or a downlink direction.

In some embodiments, it is determined that the link status of the mmWave link changes from the first status to the second status in a case where a link quality of the mmWave link is less than a first threshold; or

it is determined that the link status of the mmWave link changes from the first status to the second status in a case where a link quality of the mmWave link is less than a first threshold and the link quality of the mmWave link remains less than the first threshold for a first duration.

In some embodiments, it is determined that the link status of the mmWave link is changes from the second status to the first status in a case where a link quality of the mmWave link is greater than a second threshold; or

it is determined that the link status of the mmWave link changes from the second status to the first status in a case where a link quality of the mmWave link is greater than a second threshold and the link quality of the mmWave link remains greater than the second threshold a second duration.

In some embodiments, TID-to-link mapping of the mmWave link is not performed in a setup stage of the mmWave link; and/or TID-to-link mapping of the mmWave link is performed in a case where the mmWave link has been established and the beamforming training has been completed.

In some embodiments, the link status includes at least one of a first status, a second status, an enabled status, or a non-enabled status.

In some embodiments, the first status is the enabled on usable status, and the second status is the non-enabled on usable status. For example, the non-enabled on usable status includes an enabled on unusable status, and the non-enabled status includes a disabled status.

In some embodiments, the link status of the mmWave link is determined as the first status in a case where the mmWave link is in the enabled status and the beamforming training has been completed on the mmWave link; or

the link status of the mmWave link is determined as the first status in a case where the mmWave link is in the enabled status, the beamforming training has been completed on the mmWave link, and a communication requirement between two MLDs corresponding to the mmWave link is satisfied.

In some embodiments, the link status of the mmWave link is determined as the second status in a case where the mmWave link is in the enabled status and the beamforming training is not complete on the mmWave link; or

the link status of the mmWave link is determined as the second status in a case where the mmWave link is in the enabled status, and the beamforming training is not complete on the mmWave link and/or a communication requirement between two MLDs corresponding to the mmWave link is not satisfied.

In some embodiments, the link status of the mmWave link is determined as the enabled status in a case where the mmWave link has been established and at least one TID is mapped to the mmWave link in an uplink direction or a downlink direction;

it is determined that the link status of the mmWave link changes from the non-enabled status to the enabled status in a case where the mmWave link is in the non-enabled status and at least one TID is mapped to the mmWave link in an uplink direction or a downlink direction; or

it is determined that the link status of the mmWave link changes from the non-enabled status to the enabled status in a setup process of the mmWave link in a case where the mmWave link is in the non-enabled status and at least one TID is mapped to the mmWave link in an uplink direction or a downlink direction.

In some embodiments, the link status of the mmWave link is determined as the non-enabled status in a case where the mmWave link has been established and no traffic identifier (TID) is mapped to the mmWave link in an uplink direction or a downlink direction;

the link status of the mmWave link is determined as the non-enabled status in a setup process of the mmWave link in a case where no TID is mapped to the mmWave link in an uplink direction or a downlink direction; or
the link status of the mmWave link is determined as the non-enabled status in a case where no TID is mapped to the mmWave link in an uplink direction or a downlink direction.

In some embodiments, it is determined that the link status of the mmWave link changes from the first status to the second status in a case where a link quality of the mmWave link is less than a first threshold; or
it is determined that the link status of the mmWave link changes from the first status to the second status in a case where a link quality of the mmWave link is less than a first threshold and the link quality of the mmWave link remains less than the first threshold for a first duration.

In some embodiments, it is determined that the link status of the mmWave link changes from the second status to the first status in a case where a link quality of the mmWave link is greater than a second threshold; or
it is determined that the link status of the mmWave link changes from the second status to the first status in a case where a link quality of the mmWave link is greater than a second threshold and the link quality of the mmWave link remains greater than the second threshold for a second duration.

In some embodiments, it is determined that the link status of the mmWave link changes from the second status to the enabled status in a case where the mmWave link is in the second status and a link quality of the mmWave link is less than a third threshold.

In some embodiments, it is determined that the link status of the mmWave link changes from the second status to the non-enabled status in a case where the mmWave link is in the second status and the MLD does not transmit a frame via the mmWave link within a third duration;

it is determined that the link status of the mmWave link changes from the second status to the non-enabled status in a case where the mmWave link is in the second status and the MLD transmits a disassociation frame; or
the mmWave link is reestablished in a case where the mmWave link is in the second status and the MLD is reassociated with another MLD.

In some embodiments, it is determined that the link status of the mmWave link changes from the non-enabled status to the first status in a case where the mmWave link is in the non-enabled status, the beamforming training is recompleted on the mmWave link, and at least one TID is mapped to the mmWave link in an uplink direction or a downlink direction.

In some embodiments, the mmWave link is established upon completion of the beamforming training on the mmWave link; or the beamforming training is performed on the mmWave link upon setup of the mmWave link.

In S530, a first frame is transmitted over the mmWave link in a case where the mmWave link is in a first status.

In some embodiments, the first frame includes at least one of a management frame, a QoS null frame, a control frame, or a data frame.

In S550, a frame associated with the beamforming training is transmitted over the mmWave link in a case where the mmWave link is in a second status.

The frame associated with the beamforming training is a frame for transmission in the beamforming training or a frame for transmission in completion of the beamforming training. Illustratively, the frame associated with the beamforming training includes at least one of a sector sweep frame or a sector sweep frame-Ack frame.

In S570, a second frame is transmitted.

For details, reference may be made to S450, which are not described herein any further.

In S590, a third frame is transmitted.

For details, reference may be made to S460, which are not described herein any further.

In summary, the link status of the mmWave link is determined based on whether beamforming training is complete prior to setup of the mmWave link, in setup of the mmWave link, and upon setup of the mmWave link. The mmWave link is determined to efficiently use the mmWave link for communication, such that the communication quality of the mmWave communication is effectively improved, the failure rate of the mmWave communication is reduced, and the resource waste is mitigated. In addition, use of the mmWave link is further supported by transmitting the second frame and the third frame, such that the MLD acquires the mmWave capabilities information through the second frame and information related to the beamforming through the third frame. Thus, the stability and flexibility of the use of mmWave link are improved, the spectrum utilization rate is improved, and the resource waste is mitigated. In addition, the designs of the frame formats used in various stages of the multi-link operation are provided to offer feasibility for negotiation, setup, and status change of the mmWave link.

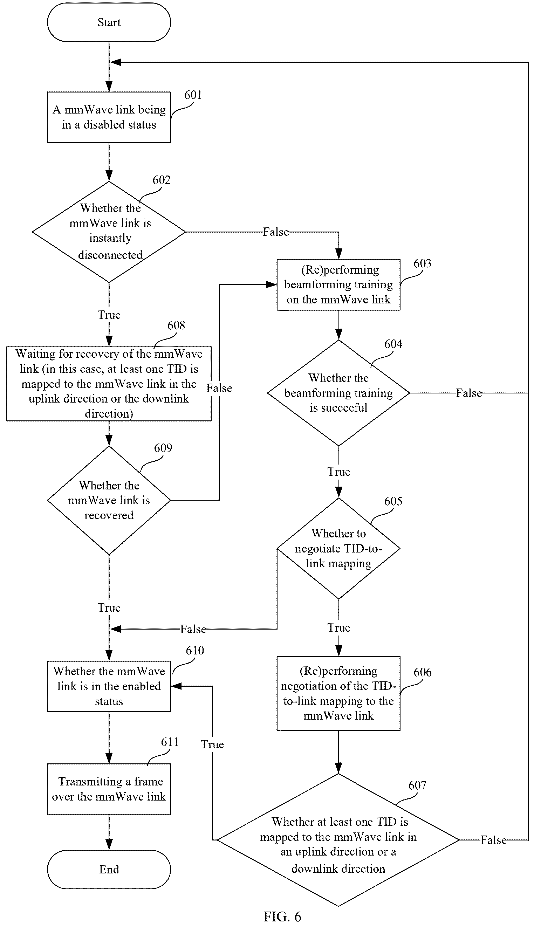

FIG. 6 is a flowchart of a method for transmitting frames according to some embodiments of the present disclosure. Using an example where the method is performed by at least one of an AP or a non-AP STA, the method includes at least part of the following processes.

**In S601,** a mmWave link is determined to be in a disabled status.

In the mmWave link is determined to be in the disabled status, that is, the link status of the mmWave link is set as the disabled status.

In the setup stage of the mmWave link, the link status of the mmWave link is the disabled status; an initial link status of the mmWave link is the disabled status; no TID is mapped to the mmWave link, and the link status of the mmWave link is the disabled status; the beamforming training is not complete on the mmWave link, and the link status of the mmWave link is the disabled status; or no TID is mapped to the mmWave link, and the link status of the mmWave link is the disabled status.

In some embodiments, in the stage of negotiating to establish the mmWave link, no TID is mapped to the mmWave link between the AP MLD that supports the mmWave capabilities and the non-AP MLD that supports the mmWave capabilities, and the link status of the mmWave link is the disabled status.

In some embodiments, the beamforming training is not complete on the mmWave link, and the link status of the mmWave link is determined as the disabled status. The incompletion of the beamforming training includes incompletion of the complete beamforming training and incompletion of partial beamforming training.

In some embodiments, in a case where the TID-to-link negotiation fails on the mmWave link or no TID is mapped to the mmWave link in the uplink direction and the downlink direction, the link status of the mmWave link is determined as the disabled status.

In some embodiments, in a case where the link quality of the mmWave link is less than the first threshold, the link status of the mmWave link is determined as the disabled status.

The link quality of the mmWave link is determined based on a link quality evaluation result of the mmWave link, and the link quality evaluation result is determined based on at least one of an RSSI value, a packet loss rate, a retransmission rate, a number of packet losses, a number of retransmissions, or a number of transmission failures. Illustratively, in a case where the RSSI value is less than a first value (e.g., -78 dBm), the number of transmission failures reaches a second value (e.g., one, three, and the like), the packet loss rate reaches a third value, or the number of retransmissions reaches a fourth value, the link quality of the mmWave link is determined to be less than the first threshold.

Illustratively, in a case where the number of transmission failures on the mmWave link reaches one, that is, the transmission fails on the mmWave link, the link quality of the mmWave link is determined to be less than the first threshold.

Illustratively, in a case where at least one TID is mapped to the mmWave link in at least one of the uplink direction or the downlink direction, the beamforming training has been completed on the mmWave link, and the transmission fails on the mmWave link or the RSSI value is less than the first value due to object obstruction, the link status of the mmWave link is determined as the disabled status.

In some embodiments, at least two links are present between the AP MLD that supports the mmWave capabilities and the non-AP MLD that supports the mmWave capabilities, and operate in the same frequency band or in different frequency bands concurrently. Illustratively, at least one of the at least two links between the AP MLD that supports the mmWave capabilities and the non-AP MLD that supports the mmWave capabilities operates in the mmWave frequency band, and another at least one of the at least two links between the AP MLD that supports the mmWave capabilities and the non-AP MLD that supports the mmWave capabilities operates in a frequency band other than the mmWave frequency band (e.g., the sub-7 GHz frequency band).

In a case where the link operating at the sub-7 GHz frequency band has been established, and at least one TID is mapped to the link, the link status of the mmWave link is the enabled status. Otherwise, the link status of the mmWave link is the disabled status.

In some embodiments, in a case where the beamforming and the TID-to-link mapping are complete upon setup of the mmWave link, and at least one TID is mapped to the mmWave link in the uplink direction or the downlink direction, the link status of the mmWave link is set as the enabled status.

The link status of the mmWave link is set as the enabled status, that is, the link status of the mmWave link is determined as the enabled status.

In some embodiments, the frame, including at least one of the data frame, the management frame, the control frame, or the QoS null frame, is transmitted over the mmWave link in the enabled status.

In some embodiments, individually addressed frame transmission is performed over the mmWave link, which depends on a power source status or a power status of the non-AP MLD operating on the mmWave link. Illustratively, in a case where the power source status of the non-AP MLD indicates that the non-AP MLD may transmit the frame over the mmWave link, the non-AP MLD is permitted to transmit the frame over the mmWave link, the non-AP MLD is capable of transmitting the frame over the mmWave link, and thus the mmWave link is used for individually addressed frame transmission; and in a case where the power source status of the non-AP MLD indicates that the non-AP MLD may not transmit the frame over the mmWave link, the non-AP MLD is not permitted to transmit the frame over the mmWave link, the non-AP MLD is uncapable of transmitting the frame over the mmWave link, and thus the mmWave link is used for individually addressed frame transmission.

In a case where the data frame (including at least one of the data frame used for individually addressing or the data frame used for broadcast addressing) is transmitted over the mmWave link, only the data frame including the TID mapped to the mmWave link is transmitted over the mmWave link. That is, the TID in the data frame transmitted over the mmWave link is coincident with the TID mapped to the mmWave link. Illustratively, the mmWave AP or STA affiliated with the AP MLD associated with the mmWave link transmits MSDUs/A-MSDUs including the TID mapped to the mmWave link over the mmWave link in an uplink or downlink direction.

In a case where the mmWave link is disconnected, the mmWave link does not operate normally, the mmWave link does not transmit data, the mmWave link is failure, or the mmWave link is unusable, S602 is performed.

**In S602,** whether the mmWave link is instantly disconnected is determined.

In some embodiments, the instant disconnection means momentary disconnection or flash disconnection, and refers to unstable transmission of the mmWave link. The link is momentarily disconnected, but recovers independently within a short duration.

In some embodiments, non-instant disconnection means disconnection that is caused by failure of the mmWave link and failure of the MLD and does not recover.

In some embodiments, whether the mmWave link is instantly disconnected is determined based on whether the beamforming training is complete prior to disconnection of the mmWave link, whether the TID is mapped to the mmWave link prior to disconnection of the mmWave link, or whether the mmWave link transmits data normally prior to disconnection of the mmWave link.

Illustratively, in a case where the beamforming training is not complete prior to disconnection of the mmWave link, or no TID is mapped to the mmWave link in the uplink direction or the downlink direction prior to disconnection of the mmWave link, the disconnection of the mmWave link is the non-instant disconnection.

Illustratively, in a case where the beamforming training has been completed prior to disconnection of the mmWave link, at least one TID is mapped to the mmWave link in the uplink direction or the downlink direction prior to disconnection of the mmWave link, or the mmWave link transmits data normally prior to disconnection of the mmWave link, the disconnection of the mmWave link is the instant disconnection.

In a case where the disconnection or failure of the mmWave link is not the instant disconnection, S603 is performed.

In a case where the disconnection or failure of the mmWave link is the instant disconnection, S608 is performed.

**In S603,** the beamforming training is (re)performed on the mmWave link.

In some embodiments, S603 is implemented as (re)performing the beamforming on the mmWave link, or S603 is implemented as (re)performing the beamforming training and the beamforming on the mmWave link.

In some embodiments, in a case where the beamforming is not performed on the mmWave link prior to S603, the beamforming is performed on the mmWave link; and in a case where the beamforming is performed on the mmWave link prior to S603, the beamforming is reperformed on the mmWave link.

In some embodiments, in a case where the beamforming training is not performed on the mmWave link prior to S603, the beamforming training is performed on the mmWave link; and in a case where the beamforming training is performed on the mmWave link prior to S603, the beamforming training is reperformed on the mmWave link.

In some embodiments, in a case where the beamforming training is not performed on the mmWave link or information of the beamforming training is invalid prior to S603, the beamforming training is (re)performed on the mmWave link. The reperforming the beamforming training includes reperforming the partial beamforming training or the complete beamforming training. The performing the beamforming training includes performing the partial beamforming training or the complete beamforming training.

**In S604,** whether the beamforming training is successful is determined.

In some embodiments, S604 is implemented as determining whether the beamforming is successful, or S604 is implemented as determining whether the beamforming training and the beamforming are successful.

In some embodiments, in a case where the beamforming is complete on the mmWave link upon S603, it is determined that the beamforming training is successful; or in a case where the beamforming is not complete on the mmWave link upon S603, it is determined that the beamforming training is unsuccessful.

In some embodiments, in a case where the beamforming and the beamforming training are complete on the mmWave link upon S603, it is determined that the beamforming training is successful; or in a case where the beamforming and the beamforming training are not complete on the mmWave link upon S603, it is determined that the beamforming training is unsuccessful.

In some embodiments, in a case where the beamforming training is complete on the mmWave link (that is, the complete beamforming training or the partial beamforming training is complete), it is determined that the beamforming training is successful. The successful beamforming training on the mmWave link means that the mmWave link includes valid beamforming information.

In some embodiments, in a case where the beamforming training is not complete on the mmWave link (that is, the complete beamforming training or the partial beamforming training is not complete), it is determined that the beamforming training is unsuccessful. The unsuccessful beamforming training on the mmWave link means that the mmWave link does not include valid beamforming information.

In a case where the beamforming training is unsuccessful, S601 is performed.

In a case where the beamforming training is successful, S605 is performed.

**In S605,** whether to negotiate TID-to-link mapping is determined.

Whether the mmWave link needs to negotiate the TID-to-link mapping is determined.

In some embodiments, in a case where the TID-to-link mapping is not performed on the mmWave link prior to S605, negotiation of the TID-to-link mapping is not performed on the mmWave link prior to S605, the TID-to-link mapping to the mmWave link is invalid, or negotiation of the TID-to-link mapping to the mmWave link is invalid, S606 is performed.

In some embodiments, in a case where the TID-to-link mapping or the negotiation of the TID-to-link mapping to the mmWave link is valid, the negotiation of the TID-to-link mapping is not required, and S610 is performed.

In some embodiments, no TID is mapped to the mmWave link in the uplink direction and the downlink direction, no valid TID is mapped to the mmWave link in the uplink direction and the downlink direction, or TID mapping to the mmWave link in the uplink direction and the downlink direction is invalid, the negotiation of the TID-to-link mapping needs to be (re)performed, and S606 is performed.

In some embodiments, a valid TID is mapped to the mmWave link in the uplink direction and the downlink direction, the negotiation of the TID-to-link mapping is not required, and S610 is performed.

**In S606,** negotiation of the TID-to-link mapping is (re)performed between MLDs.

In a case where the TID-to-link mapping or the negotiation of the TID-to-link mapping is not performed between the MLDs prior to S603, the negotiation of the TID-to-link mapping is performed between MLDs; and in a case where the negotiation of the TID-to-link mapping or the TID-to-link mapping is performed between the MLDs prior to S603, the negotiation of the TID-to-link mapping is reperformed between MLDs. The MLD is the AP MLD and the non-AP MLD in S601.

**In S607,** whether at least one TID is mapped to the mmWave link in the uplink direction or the downlink direction is determined.

In a case where the negotiation of the TID-to-link mapping is successful, the TID-to-link mapping is performed based on the negotiated method. The negotiated method for the TID-to-link mapping diversifies. For example, the TID is mapped to the mmWave link, the TID is mapped to the sub-7 GHz link, or the TID is mapped to the mmWave link and the sub-7 GHz link, which is not limited in the present disclosure.

In a case where the negotiation of the TID-to-link mapping fails, the TID-to-link mapping is performed using a default mode. That is, the TID is mapped to all the links (including the mmWave link). All the he links include the uplink and the downlink, and do not exclude a case where all the he links only include the uplink and the downlink.

As several possible negotiated methods are available for the TID-to-link mapping in a case where the negotiation of the TID-to-link mapping is successful, whether at least one TID is mapped to the mmWave link in at least one of the uplink direction or the downlink direction is considered.

In a case where the negotiation of the TID-to-link mapping is successful, and at least one TID is mapped to the mmWave link in at least one of the uplink direction or the downlink direction, S610 is performed.

In a case where the negotiation of the TID-to-link mapping is successful, and no TID is mapped to the mmWave link in the uplink direction and the downlink direction, S601is performed.

In a case where the TID-to-link mapping is performed using the default mode when the negotiation of the TID-to-link mapping fails, at least one TID is mapped to the mmWave link in at least one of the uplink direction or the downlink direction. That is, in a case where the negotiation of the TID-to-link mapping fails, at least one TID is mapped to the mmWave link in at least one of the uplink direction or the downlink direction, and S610 is performed.

**In S608,** the process awaits recovery of the mmWave link.

In some embodiments, in a case where at least one TID is mapped to the mmWave link in at least one of the uplink direction or the downlink direction, and the beamforming training has been completed on the mmWave link, the disconnection of the mmWave link is an instant disconnection, and the process awaits for a first duration for the recovery of the mmWave link.

In some embodiments, the disconnection or failure of the mmWave link is an instant disconnection, and the mmWave link recovers independently. A wait duration is the first duration.

The first duration is default, configured, predefined by the communication protocol, or independently determined by the AP MLD or non-AP MLD.

**In S609,** whether the mmWave link is recovered is determined.

In a case where the mmWave link operates normally, frame transmission is successful, the failure is removed, or the link quality of the mmWave link is greater than the second threshold, the mmWave link is determined to be recovered, and S610 is performed.

In a case where the mmWave link does not operate normally, frame transmission fails, the failure is not removed, or the link quality of the mmWave link is less than the third threshold, the mmWave link is determined to be not recovered, and S603 is performed.

The link quality of the mmWave link is determined based on a link quality evaluation result, and the link quality evaluation result is determined based on at least one of an RSSI value, a packet loss rate, a retransmission rate, a number of packet losses, a number of retransmissions, or a number of transmission failures. Illustratively, in a case where the RSSI value is greater than a first value (e.g., -78 dBm), the number of transmission failures is less than a second value (e.g., one, three, and the like), the packet loss rate is less than a third value, or the number of retransmissions is less than a fourth value, the link quality of the mmWave link is determined to be greater than the second threshold.

Illustratively, in a case where the number of transmission failures on the mmWave link is less than one, that is, the transmission is successful on the mmWave link, the link quality of the mmWave link is determined to be greater than the first threshold.

For the third threshold, reference may be made to the first threshold and the second threshold. The first threshold, the second threshold, and the third threshold are the same or different.

**In S610,** whether the link status of the mmWave link is the enabled status is determined.

In some embodiments, in a case where the beamforming training and the TID-to-link mapping are complete upon setup of the mmWave link, and at least one TID is mapped to the mmWave link, the link status of the mmWave link is set as the enabled status.

In some embodiments, the beamforming training has been completed on the mmWave link in the setup process of the mmWave link, and the at least one TID is mapped to the mmWave link in the uplink direction or the downlink direction, the link status of the mmWave link is set as the enabled status.

The link status of the mmWave link is set as the enabled status, that is, the link status of the mmWave link is determined as the enabled status.

**In S611,** a frame is transmitted over the mmWave link.

In some embodiments, the frame, including at least one of the data frame, the management frame, the control frame, or the QoS null frame, is transmitted over the mmWave link in the enabled status. For details of the frame transmission, reference may be made to S601, which are not described herein any further.

In summary, in the method according to the present disclosure, whether the mmWave link is usable is determined based on one or more determining conditions, such that the link status is dynamically updated, and the problem that the mmWave link has been established but is unusable is solved. In addition, the enabled status and the disabled status of the mmWave link are redefined, and the mmWave link in the newly-defined enabled status is used for the frame transmission. The newly-defined enabled status provides more superior and valid transmission parameters for the mmWave link, such that the transmission performance, the stability, and the communication quality of the mmWave link are further improved.

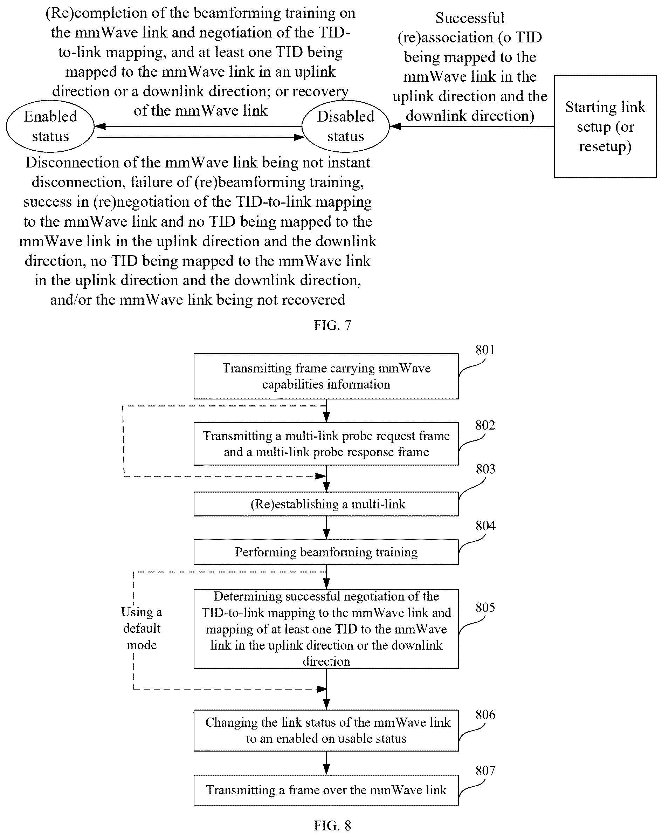

FIG. 7 is a flowchart of a method for determining link statuses according to some embodiments of the present disclosure. Using an example where the method is performed by at least one of an AP MLD or a non-AP MLD, the method includes at least part of the following processes.

A link setup procedure or a link re-setup procedure is started for the mmWave link.

In a case where the AP MLD and the non-AP MLD corresponding to the mmWave link are successfully associated or are successfully reassociated, the beamforming training has been successfully performed on the mmWave link (including completion of the partial beamforming training and completion of the complete beamforming training), or the beamforming training is not successfully performed on the mmWave link. In addition, no TID is mapped to the mmWave link in the uplink direction or the downlink direction, and the mmWave link is first in the disabled status.

In a case where the mmWave link is first in the disabled status, the mmWave link is disallowed for the non-AP MLD. For example, the link is not used for the individually addressed frame (including the management frame and the control frame) exchange between the non-AP MLD and the mmWave AP STA in the associated AP MLD. Alternatively, in a case where the mmWave link is in the disable status, the mmWave link is configured to transmit the frame associated with the beamforming training.

In a case where at least one TID is mapped to the mmWave link in at least one of the uplink direction or the downlink direction upon (re)completion of the beamforming training on the mmWave link and the negotiation of the TID-to-link mapping, it is determined that the mmWave link is in the enabled status or changes from the disabled status to the enabled status. Alternatively, upon independent recovery of the mmWave link, it is determined that the mmWave link is in the enabled status or changes from the disabled status to the enabled status.

In a case where the disconnection or failure of the mmWave link is not the instant disconnection, the (re) beamforming training on the mmWave link fails, the (re)beamforming on the mmWave link fails, (re)negotiation of the TID-to-link mapping to the mmWave link is successful and no TID is mapped to the mmWave link in the uplink direction and the downlink direction, (re)TID-to-link mapping to the mmWave link fails, no TID is mapped to the mmWave link in the uplink direction and the downlink direction, and/or the mmWave link is not recovered, it is determined that the mmWave link is in the disabled status or changes from the enabled status to the disabled status.

For details, reference may be made to the related description in the embodiments shown in FIG. 6, which are not described herein any further.

In summary, in the method according to the present disclosure, the enabled status and the disabled status of the mmWave link are newly defined, and the mmWave link in the newly-defined enabled status is configured for the frame transmission. The newly-defined enabled status provides more superior and valid transmission parameters for the mmWave link, such that the transmission performance, the stability, and the communication quality of the mmWave link are further improved. In addition, various change conditions and change methods between different link status are provided, such that the feasibility and flexibility of use of the mmWave link are improved.

FIG. 8 is a flowchart of a method for transmitting frames according to some embodiments of the present disclosure. Using an example where the method is performed by at least one of an AP (MLD) or a non-AP (MLD), the method includes at least part of the following processes.

**In S801,** a frame carrying mmWave capabilities information is transmitted.

In some embodiments, the AP transmits a beacon frame carrying the mmWave capabilities information, and the non-AP STA receives the beacon frame carrying the mmWave capabilities information; or the AP indicates a beacon frame of mmWave capabilities, and the non-AP STA instructs to receive the beacon frame of the mmWave capabilities.

In some embodiments, the non-AP STA transmits a probe request frame carrying the mmWave capabilities information, the AP receives the probe request frame and transmits a probe response frame carrying the mmWave capabilities information to the non-AP STA, and the non-AP STA receives the probe response frame.

**In S802,** a multi-link probe request frame and a multi-link probe response frame are transmitted.

Upon the multi-link discovery stage, the AP and the non-AP STA acquire complete information of a peer device mmWave STA and other affiliated STAs via the multi-link probe request frame and the multi-link probe response frame.

It should be noted that S802 is an optional process.

**In S803,** a multi-link is (re)established.

The multi-link (including the mmWave link) is established between the AP and the non-AP STA. That is, at least two links between the AP and the non-AP STA include at least one link operating in the mmWave frequency band and at least one link operating at a frequency band other than the mmWave frequency band.

As the AP supports the mmWave capabilities, or the multi-link is established between the AP and the non-AP STA, the AP is referred to as the AP MLD, and the AP MLD includes one or more APs that support the mmWave capabilities. Similarly, as the non-AP STA supports the mmWave capabilities, or the multi-link is established between the AP and the non-AP STA, the non-AP STA is referred to as the non-AP STA MLD, and the non-AP STA MLD includes one or more non-AP STAs that support the mmWave capabilities.

The multi-link setup stage and the setup stage of the mmWave link are concurrent or are sequential.

In a case where the multi-link is established (between or separately by) the AP and the non-AP STA prior to S803, the multi-link is reestablished between the AP and the non-AP STA.

In a case where the TID-to-link mapping to the mmWave link is performed in the multi-link setup stage, and at least one TID is mapped to the mmWave link, the link status of the mmWave link changes to the enabled status. Otherwise, the link status of the mmWave link changes to the disabled status.

**In S804,** beamforming training is performed.

In some embodiments, S804 is implemented as performing the beamforming, or S804 is implemented as performing the beamforming training and the beamforming.

In some embodiments, the beamforming training is performed based on the beamforming parameters negotiated in the multi-link (re)setup stage upon setup of the multi-link, and the AP MLD and the non-AP MLD acquire an optimal transmit antenna configuration for frame transmission. Upon completion of the beamforming training, the negotiation of the TID-to-link mapping to the mmWave link and the TID-to-link mapping to the mmWave link are performed.

In some embodiments, the beamforming training and the beamforming are performed based on the beamforming parameters negotiated in the multi-link (re)setup stage upon setup of the multi-link, and the AP MLD and the non-AP MLD acquire an optimal transmit antenna configuration for frame transmission. Upon completion of the beamforming training and completion of the beamforming, the negotiation of the TID-to-link mapping to the mmWave link and the TID-to-link mapping to the mmWave link are performed.

The performing the beamforming training includes performing the partial beamforming training or the complete beamforming training.

**In S805,** it is determined that the negotiation of the TID-to-link mapping to the mmWave link is successful, and at least one TID is mapped to the mmWave link.

In a case where the negotiation of the TID-to-link mapping to the mmWave link has been completed in the multi-link (re)setup stage, and at least one TID is mapped to the mmWave link in at least one of the uplink direction or the downlink direction, the process of negotiating the TID-to-link mapping is shipped upon completion of the beamforming on the mmWave link, and the link status of the mmWave link is set as an enabled on usable status. Otherwise, in a case where the negotiation of the TID-to-link mapping to the mmWave link is not complete in the multi-link (re)setup stage, and no TID is mapped to the mmWave link in the uplink direction and the downlink direction, the TID-to-link mapping is necessary or the negotiation of the TID-to-link mapping and the TID-to-link mapping are necessary upon completion of the beamforming on the mmWave link, and the link status of the mmWave link is set as an enabled on usable status in a case where the negotiation of the TID-to-link mapping is complete and at least one TID is mapped to the mmWave link in at least one of the uplink direction or the downlink direction.

**In S806,** the link status of the mmWave link changes to an enabled on usable status.

In some embodiments, S806 is performed upon S805, or S806 is directly performed upon S804.

In some embodiments, all TIDs are mapped to links at all frequency bands using a default mode of the TID-to-link mapping, and the link status of the mmWave link changes to the enabled on usable status.

**In S807,** the frame is transmitted over the mmWave link.

The frame, including at least one of the data frame, the management frame, the control frame, or the QoS null frame, is transmitted over the mmWave link in the enabled on usable status.

In some embodiments, individually addressed frame transmission is performed on the mmWave link, which depends on a power source status or a power status of the non-AP MLD operating on the mmWave link. Illustratively, in a case where the power source status of the non-AP MLD indicates that the non-AP MLD may transmit the frame over the mmWave link, the non-AP MLD is permitted to transmit the frame over the mmWave link, the non-AP MLD is capable of transmitting the frame over the mmWave link, and thus the mmWave link is used for individually addressed frame transmission; and in a case where the power source status of the non-AP MLD indicates that the non-AP MLD may not transmit the frame over the mmWave link, the non-AP MLD is not permitted to transmit the frame over the mmWave link, the non-AP MLD is incapable of transmitting the frame over the mmWave link, and thus the mmWave link is used for individually addressed frame transmission.

In a case where the data frame (including at least one of the data frame used for individually addressing or the data frame used for broadcast addressing) is transmitted over the mmWave link, only the data frame including the TID mapped to the mmWave link is transmitted over the mmWave link. That is, the TID in the data frame transmitted over the mmWave link is coincident with the TID mapped to the mmWave link. Illustratively, the mmWave AP or STA affiliated with the AP MLD associated with the mmWave link transmits MSDUs/A-MSDUs including the TID mapped to the mmWave link over the mmWave link in an uplink or downlink direction.

In summary, in the method according to the present disclosure, the enabled on usable status and the enabled on unusable status of the mmWave link are newly defined, and the mmWave link in the newly-defined enabled on usable status is used for the frame transmission. The newly-defined enabled status provides more superior and valid transmission parameters for the mmWave link, such that the transmission performance, the stability, and the communication quality of the mmWave link are further improved.

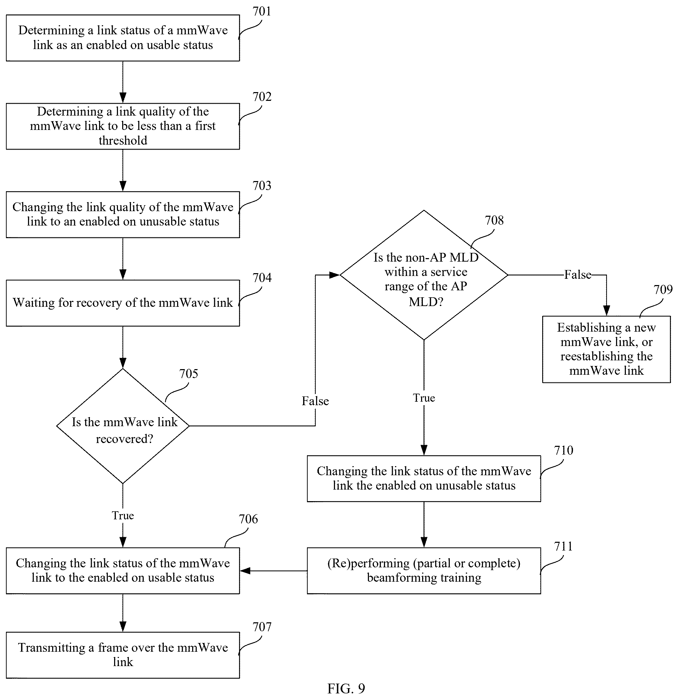

FIG. 9 is a flowchart of a method for transmitting frames according to some embodiments of the present disclosure. Using an example where the method is performed by at least one of an AP (MLD) or a non-AP (MLD), the method includes at least part of the following processes.

**In S701,** a link status of a mmWave link is determined as an enabled on usable status.

The link status of the mmWave link is determined as the enabled on usable status, that is, the mmWave link is determined to be in the enabled on usable status, or the link status of the mmWave link is set as the enabled on usable status.

In some embodiments, the link status of the mmWave link is determined as the enabled on usable status in a case where the beamforming training has been completed on the mmWave link (including completion of the complete beamforming training and completion of the partial beamforming training), TID-to-link mapping is complete on the mmWave link, and at least one TID is mapped to the mmWave link in at least one of the uplink direction or the downlink direction;

the link status of the mmWave link is determined as the enabled on usable status in a case where the mmWave link has been established, the beamforming training has been completed on the mmWave link, TID-to-link mapping is complete on the mmWave link, and at least one TID is mapped to the mmWave link in at least one of the uplink direction or the downlink direction; or

the link status of the mmWave link is determined as the enabled on usable status in a case where the beamforming training has been completed on the mmWave link in the setup process of the mmWave link, TID-to-link mapping is complete on the mmWave link, and at least one TID is mapped to the mmWave link in at least one of the uplink direction or the downlink direction.

**In S702,** a link quality of the mmWave link is determined to be less than a first threshold.

The link quality of the mmWave link is determined to be less than the first threshold, that is, the link quality of the mmWave link is judged to be less than the first threshold.

The first threshold is default, configured, predefined by the communication protocol, or independently determined by the AP MLD or non-AP MLD.

The link quality of the mmWave link is determined based on a link quality evaluation result of the mmWave link, and the link quality evaluation result is determined based on at least one of an RSSI value, a packet loss rate, a retransmission rate, a number of packet losses, a number of retransmissions, or a number of transmission failures. Illustratively, in a case where the RSSI value is less than a first value (e.g., -78 dBm), the number of transmission failures reaches a second value (e.g., one, three, and the like), the packet loss rate reaches a third value, or the number of retransmissions reaches a fourth value, the link quality of the mmWave link is determined to be less than the first threshold.

Illustratively, in a case where the number of transmission failures on the mmWave link reaches one, that is, the transmission fails on the mmWave link, the link quality of the mmWave link is determined to be less than the first threshold.

Illustratively, in a case where at least one TID is mapped to the mmWave link in at least one of the uplink direction or the downlink direction, the beamforming training has been completed on the mmWave link, and the transmission fails on the mmWave link or the RSSI value is less than the first value due to object obstruction, the link status of the mmWave link is determined as the disabled status.

**In S703,** the link quality of the mmWave link changes to an enabled on unusable status.

In some embodiments, the beamforming training is not complete on the mmWave link, and the link status of the mmWave link is determined as the enabled on unusable status. The incompletion of the beamforming training includes incompletion of the complete beamforming training and incompletion of partial beamforming training.

In some embodiments, in a case where the TID-to-link negotiation fails on the mmWave link or no TID is mapped to the mmWave link in the uplink direction and the downlink direction, the link status of the mmWave link is determined as the enabled on unusable status.

In some embodiments, in a case where the link quality of the mmWave link is less than the first threshold, the link status of the mmWave link is determined as the enabled on unusable status.

The link status of the mmWave link is determined as the enabled on unusable status, that is, the link status of the mmWave link changes to the enabled on unusable status.

In some embodiments, the AP MLD and the non-AP MLD do not transmit the frame over the mmWave link in the enabled on unusable status, or the AP MLD and the non-AP MLD transmit the frame associated with the beamforming training on the mmWave link in the enabled on unusable status.

**In S704,** the process awaits recovery of the mmWave link.

In some embodiments, in a case where at least one TID is mapped to the mmWave link in at least one of the uplink direction or the downlink direction, and the beamforming training has been completed on the mmWave link, the disconnection of the mmWave link is the instant disconnection, and a first duration is waited to wait for recovery of the mmWave link.

In some embodiments, the disconnection or failure of the mmWave link is the instant disconnection, and the mmWave link recovers independently. A wait duration is the first duration.

The first duration is default, configured, predefined by the communication protocol, or independently determined by the AP MLD or non-AP MLD.

The AP MLD or non-AP MLD wait for the recovery of the mmWave link based on the wait duration.

**In S705,** whether the mmWave link is recovered is determined.

In a case where the mmWave link operates normally, frame transmission is successful, the failure is removed, or the link quality of the mmWave link is greater than the second threshold, the mmWave link is determined to be recovered, and S706 is performed.

The second threshold is default, configured, predefined by the communication protocol, or independently determined by the AP MLD or non-AP MLD. The second threshold is the same as or different from the first threshold.

The link quality of the mmWave link is determined based on a link quality evaluation result, and the link quality evaluation result is determined based on at least one of an RSSI value, a packet loss rate, a retransmission rate, a number of packet losses, a number of retransmissions, or a number of transmission failures. For details of the second threshold, reference may be made to the first threshold. Illustratively, in a case where the frame is successfully transmitted, the RSSI value is greater than a first value (e.g., -78 dBm), or retransmission is successful within a second value (e.g., one, three, and the like) of times, the link quality of the mmWave link is determined to be greater than the second threshold.

In a case where the mmWave link does not operate normally, frame transmission fails, the failure is not removed, or the link quality of the mmWave link is less than the third threshold, the mmWave link is determined to be not recovered, and S708 is performed.

For details of the third threshold, reference may be made to the first threshold and the second threshold. Illustratively, in a case where the RSSI value is less than a first value, the number of transmission failures is less than a second value, the packet loss rate reaches a third value, or the number of retransmissions reaches a fourth value, the link quality of the mmWave link is determined to be less than the third threshold. the third threshold is the same as the first threshold and the second threshold, the third threshold is different from the first threshold, or the third threshold is different from the second threshold.

**In S706,** the link status of the mmWave link changes to the enabled on usable status.

In some embodiments, upon recovery of the mmWave link, the link status of the mmWave link changes to the enabled on usable status. That is, the link status of the mmWave link is the enabled on usable status.

In some embodiments, in a case where the beamforming and the TID-to-link mapping are complete upon setup of the mmWave link, and at least one TID is mapped to the mmWave link, the link status of the mmWave link is set as the enabled on usable status.

In some embodiments, the beamforming training has been completed on the mmWave link in the setup process of the mmWave link, and the at least one TID is mapped to the mmWave link in the uplink direction or the downlink direction, the link status of the mmWave link is set as the enabled on usable status.

**In S707,** a frame is transmitted over the mmWave link.

In some embodiments, the frame, including at least one of the data frame, the management frame, the control frame, or the QoS null frame, is transmitted over the mmWave link in the enabled on usable status. For details of the frame transmission, reference may be made to S807, which are not described herein any further.

**In S708,** whether the non-AP MLD is within a service range of the AP MLD is determined.

The service range of the AP MLD is a signal coverage of the AP MLD or a wireless medium coverage of the AP MLD.

In a case where the non-AP MLD is beyond the service range of the AP MLD, the non-AP MLD is not in communication with the AP MLD via the wireless medium. Illustratively, whether the non-AP MLD is within the service range of the AP MLD is determined based on a signal intensity. For example, in a case where the non-AP MLD fails to receive the signal of the AP MLD, the non-AP MLD is beyond the service range of the AP MLD.

In a case where the determining result indicates that the non-AP MLD is beyond the service range of the AP MLD, S709 is performed.

In a case where the determining result indicates that the non-AP MLD is within the service range of the AP MLD, S710 is performed.

**In S709,** a new mmWave link is established, or the mmWave link is reestablished.

In some embodiments, the non-AP MLD rediscovers a new AP MLD that supports the mmWave capabilities, and the non-AP MLD and the new AP MLD that supports the mmWave capabilities establish the new mmWave link; or upon reentering the service range of the AP MLD, the non-AP MLD and the AP MLD reestablish the mmWave link.

For setup of the mmWave link, reference may be made to S801, S802, and S803, which is not described herein any further.

**In S710,** the link status of the mmWave link changes to the enabled on unusable status.

The mmWave link is not recovered, and the non-AP MLD is within the service range of the AP MLD, the link status of the mmWave link is determined as the enabled on unusable status. That is, the non-AP MLD may receive the signal of the AP MLD, but the mmWave link does not transmit data normally or the link quality of the mmWave link is less than the first threshold, and the link status of the mmWave link changes to the enabled on unusable status.

**In S711,** beamforming training is reperformed.

In some embodiments, S711 is implemented as reperforming the beamforming, or S711 is implemented as reperforming the beamforming training and the beamforming.

In some embodiments, in a case where the beamforming training and the beamforming are reperformed on the mmWave link in the enabled on unusable status, S706 is performed upon completion of the beamforming training and completion of the beamforming.

In some embodiments, in a case where the beamforming training is reperformed on the mmWave link in the enabled on unusable status, S706 is performed upon completion of the beamforming training and completion of the beamforming.

In some embodiments, in a case where the beamforming is reperformed on the mmWave link in the enabled on unusable status, S706 is performed upon completion of the beamforming training and completion of the beamforming.

Reperforming the beamforming training includes reperforming the complete beamforming training and reperforming the partial beamforming training.

In summary, in the method according to the present disclosure, whether the mmWave link is usable is determined based on one or more determining conditions, such that the link status is dynamically updated, and the problem that the mmWave link has been established but is unusable is solved. In addition, the enabled on usable status and the enabled on unusable status of the mmWave link are newly defined, and the mmWave link in the newly-defined enabled on unusable status is used for the frame transmission. The newly-defined enabled status provides more superior and valid transmission parameters for the mmWave link, such that the transmission performance, the stability, and the communication quality of the mmWave link are further improved.

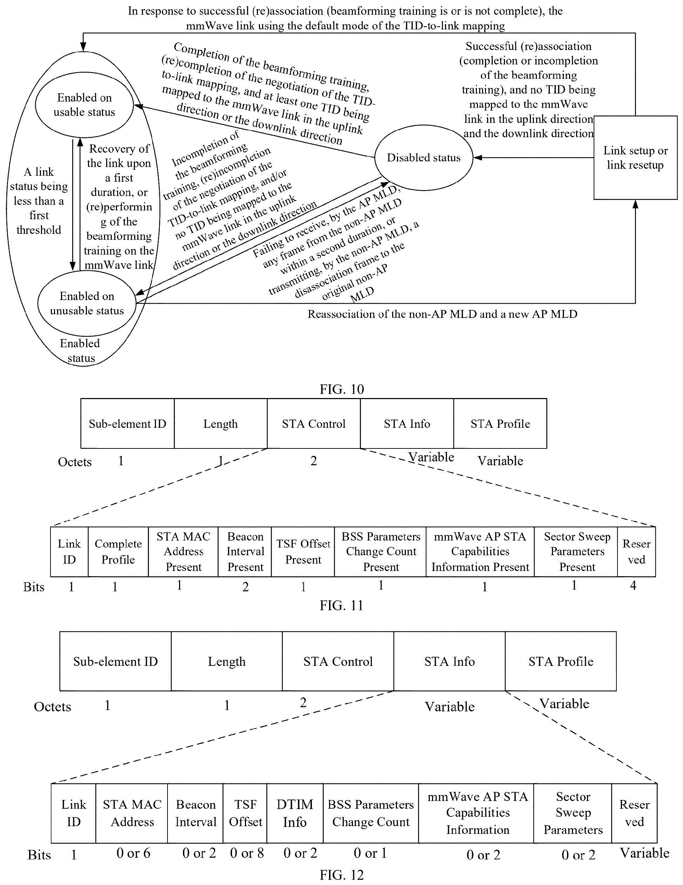

FIG. 10 is a flowchart of a method for determining link statuses according to some embodiments of the present disclosure. Using an example where the method is performed by at least one of an AP (MLD) or a non-AP (MLD), the method includes at least part of the following processes.

Setup or re-setup of a mmWave link is started between the AP and the non-AP STA. Illustratively, a frame carrying mmWave capabilities information is transmitted between the AP and the non-AP STA. The AP and the non-AP STA both support the mmWave capabilities. That is, the AP and the non-AP STA both are the MLD. Thus, the AP is referred to as the AP MLD, and the non-AP STA is referred to as the non-AP MLD.

In some embodiments, the AP transmits a beacon frame carrying the mmWave capabilities information, and the non-AP STA receives the beacon frame carrying the mmWave capabilities information; or the AP indicates a beacon frame of mmWave capabilities, and the non-AP STA instructs to receive the beacon frame of the mmWave capabilities.

In some embodiments, the non-AP STA transmits a probe request frame carrying the mmWave capabilities information, the AP receives the probe request frame and transmits a probe response frame carrying the mmWave capabilities information to the non-AP STA, and the non-AP STA receives the probe response frame.

Upon setup of the mmWave link, the link status of the mmWave link is directly set as the enabled status; or the link status of the mmWave link is first set as the disabled status, and then changes from the disabled status to the enabled status.

In a case where the AP MLD and the non-AP MLD are successfully associated or are successfully reassociated in the setup stage of the mmWave link, the mmWave link uses the default mode of the TID-to-link mapping, and the link status of the mmWave link is directly set as the enabled status no matter whether the beamforming training has been completed or is not complete. The default mode of the TID-to-link mapping is to map the TID to all the links (including the mmWave link). That is, upon the TID-to-link mapping using the default mode of the TID-to-link mapping, at least one TID is mapped to all links between the AP MLD and the non-AP MLD in at least one of the uplink direction or the downlink direction.

In a case where no TID is mapped to the mmWave link in the setup stage of the mmWave link, an initial link status of the mmWave link is the disabled status. The mmWave link being in the disabled status means that the mmWave link is disallowed or disabled for the non-AP MLD. The mmWave link in the disabled status is not used or cannot be used for frame transmission, including the management frame, the control frame, the data frame, and the QoS null frame. For example, the frame is a TID-to-link mapping response frame, a TID-to-link mapping end frame, a TID-to-link mapping removing frame, and the like.

In a case where at least one TID is mapped to the mmWave link in at least one of the uplink direction or the downlink direction upon negotiation of the TID-to-link mapping to the mmWave link in the disabled status, the link status of the mmWave link changes from the disabled status to the enabled status.

In a case where the beamforming training has been completed on the mmWave link in the enabled status (including completion of the complete beamforming training and completion of the partial beamforming training), the link status of the mmWave link changes from the enabled status to the disabled status. In a case where the beamforming training on the mmWave link in the enabled status fails or is not complete, the link status of the mmWave link changes from the enabled status to the enabled on unusable status.

In a case where the mmWave link in the enabled on unusable status is used for frame transmission, including the management frame, the control frame, the data frame, and the QoS null frame. Illustratively, individually addressed frame transmission is performed over the mmWave link. In a case where the data frame (including at least one of the data frame used for individually addressing or the data frame used for broadcast addressing) is transmitted over the mmWave link, only the data frame including the TID mapped to the mmWave link is transmitted over the mmWave link. That is, the TID in the data frame transmitted over the mmWave link is coincident with the TID mapped to the mmWave link. Illustratively, the mmWave AP or STA affiliated with the AP MLD associated with the mmWave link transmits MSDUs/A-MSDUs including the TID mapped to the mmWave link over the mmWave link in an uplink or downlink direction.

In a case where the beamforming training and the negotiation of the TID-to-link have been successfully performed on the mmWave link in the disabled status, and at least one TID is mapped to the mmWave link in at least one of the uplink direction or the downlink direction, the link status of the mmWave link directly changes from the disabled status to the enabled on usable status.

In a case where the mmWave link is in the enabled on usable status, frame transmission in the multi-link operation is performed over the mmWave link. In a case where the link quality of the mmWave link is less than the first threshold, for example, the link quality is reduced to the first threshold due to a brief shadow event (e.g., a person or object blocks the mmWave link) or a change in the link quality caused by the movement of the non-AP MLD, the frame transmission is not performed over the mmWave link normally, and the link status of the mmWave link changes from the enabled on usable status to the enabled on unusable status.

In a case where the mmWave link is in the enabled on unusable status, the mmWave link is unusable, and the frame for individual addressing (e.g., a data frame) is not transmitted between the AP and the non-AP STA. Or the mmWave link in the enabled on unusable status is configured to transmit the frame associated with the beamforming training.

In a case where the link quality of the mmWave link returns to a status higher than the first threshold upon the first duration, or in a case where the beamforming training is reperformed on the mmWave link, the link status of the mmWave link changes from the enabled on unusable status to the enabled on usable status. The first duration is default, configured, predefined by the communication protocol, or independently determined by the AP MLD or the non-AP MLD. Illustratively, in a case where the RSSI value is less than a 0 dB threshold, the first duration is 550 ms; in a case where the RSSI value is less than a 10 dB threshold, the first duration ranges from 300 to 450 ms; or in a case where the RSSI value is less than a 20 dB threshold, the first duration ranges from 100 to 300 ms.

In a case where the AP MLD and the non-AP MLD fail to successfully transmit any frame (e.g., a data frame for maintaining the mmWave link active, a power-saving poll (PS-Poll) frame, a management frame, a control frame, and the like) over the mmWave link within the second duration, or in a case where the non-AP MLD transmits a disassociation frame to the AP MLD, the link status of the mmWave link changes from the enabled on unusable status to the disabled status. The second duration is default, configured, predefined by the communication protocol, or independently determined by the AP MLD or the non-AP MLD. Illustratively, the second duration is a predefined MLD maximum idle period. The second duration is the same as or different from the first duration.

In a case where the non-AP MLD and the disassociated AP MLD reestablish the multi-link association, the procedure enters the re-setup stage of the mmWave link. In a case where the non-AP MLD and a new AP MLD establish the multi-link association, the setup stage of the mmWave link is started.

In summary, in the method according to the present disclosure, the enabled on usable status and the enabled on unusable status of the mmWave link are newly defined, and the mmWave link in the newly-defined enabled on usable status is used for the frame transmission. The newly-defined enabled status provides more superior and valid transmission parameters for the mmWave link, such that the transmission performance, the stability, and the communication quality of the mmWave link are further improved. In addition, various change conditions and change methods between different link status are provided, such that the feasibility and flexibility of use of the mmWave link are improved.

It should be understood that the numerical marks corresponding to various processes in the method embodiments according to the present disclosure are merely for the purpose of illustration and do not imply any limitation on the sequence of various processes. The various processes in each method embodiment may be combined, split, or deleted in different embodiments or designs, and may be performed in different sequences. For example, S410 and S420 may be combined into one process; S450 and S460 may be combined into one process; S430 and S440 may be combined into one process; S430 may be performed prior to S410; S440 may be performed prior to S410; S450 may be performed prior to S410; S460 may be performed prior to S410; S450 may be performed prior to S430; and S460 may be performed prior to S440.

FIG. 11 to FIG. 13 are schematic diagrams of formats of fields carried in per-STA profile subelements according to some embodiments of the present disclosure. The numbers below the fields represent octets or bits of the fields.

The per-STA profile subelements are carried in an STA Profile field, the STA Profile field is carried in a basic multi-link element, and the basic multi-link element is carried in a beacon frame or a probe response frame. In some embodiments, the beacon frame or the probe response frame carrying the per-STA profile subelements is transmitted by the AP MLD in the multi-link discovery stage, by the AP or STA in the multi-link association stage, or by the AP or STA in the multi-link reassociation stage.

The per-STA profile subelements include fields indicating the mmWave capabilities of the AP MLD.

As illustrated in FIG. 11 to FIG. 13, the per-STA profile subelement includes at least one of a Subelement ID field, a Length field, an STA Control field, an STA Information (Info) field, or an STA Profile field.

In some embodiments, as illustrated in FIG. 11, the STA Control field includes at least one of a Link ID field, a Complete Profile field, an STA MAC Address Present field, a Beacon Interval Presen field, a Timing Synchronization Function (TSF) Offset Present field, a BSS Parameters Change Count Present field, a mmWave AP STA Capabilities Information Present field, a Sector Sweep Parameters Present field, or a Reserved field.

In some embodiments, as illustrated in FIG. 12, the STA Info field includes at least one of a Link ID field, an STA MAC Address field, a Beacon Interval field, a TSF Offset field, a Delivery Traffic Indication Map (DTIM) Info field, a BSS Parameters Change Count field, a mmWave AP STA Capabilities Information field, a Sector Sweep Parameters field, or a Reserved field.

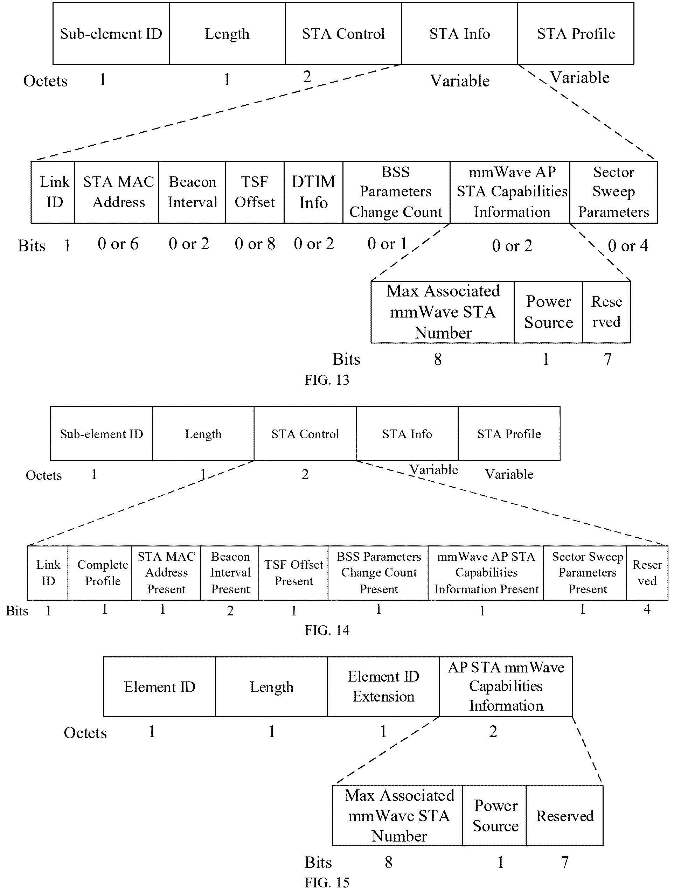

In some embodiments, as illustrated in FIG. 13, the mmWave AP STA Capabilities Information field includes at least one of a Max Associated mmWave STA Number field, a Power Source field, or a Reserved field. The Max Associated mmWave STA Number field indicates a maximum number of mmWave STAs (the STA supporting the mmWave capabilities) that are associated with support association with the mmWave AP (the AP supporting the mmWave capabilities). Illustratively, in a case where the Power Source field takes a first value (e.g., 0), the power source of the AP is a battery; and in a case where the Power Source field takes a second value (e.g., 1), the power source of the AP is not a battery.

In some embodiments, the AP that has the mmWave capabilities sets a value of a mmWave AP STA Capabilities Information Present field in the STA Control field to a second value (e.g., 1), and carries a mmWave AP STA Capabilities Information field in the STA Information field, such that indication of the mmWave capabilities of the AP MLD is achieved.

FIG. 14 is a schematic diagram of formats of fields carried in per-mmWave STA profile subelements according to some embodiments of the present disclosure. The numbers below the fields represent octets or bits of the fields. The per-mmWave STA profile subelement is dedicated to describe mmWave AP STA information to distinguish the mmWave AP STA information from non-mmWave AP STA information.

The per-mmWave STA profile subelement is carried in an STA Profile field, the STA Profile field is carried in a basic multi-link element, and the basic multi-link element is carried in the beacon frame or the probe response frame. In some embodiments, the beacon frame or the probe response frame carrying the per-mmWave STA profile subelements is transmitted by the AP MLD in the multi-link discovery stage, by the AP or STA in the multi-link association stage, or by the AP or STA in the multi-link reassociation stage.

The per-mmWave STA profile subelements include fields indicating the mmWave capabilities of the AP MLD.

As illustrated in FIG. 14, the per-mmWave STA profile subelement includes at least one of a Subelement ID field, a Length field, an STA Control field, an STA Info field, or an STA Profile field.

In a case where the Subelement ID field takes a value of a second value (e.g., 1), the subelement is the per-mmWave STA profile subelement. Values of the Subelement ID field are listed in Table 2.

Table 2 Optional subelement IDs in the multi-link element

| Subelement ID | Name | Extensible |
|---------------|------|------------|
| 0 | Per-STA Profile | Yes |
| 1 | Per-mmWave STA Profile | Yes |
| 2-220 | Reserved | - |
| 221 | Vendor Specific | Vendor defined |
| 222-253 | Reserved | - |
| 254 | Fragment | No |
| 255 | Reserved | - |

The STA Control field includes at least one of a Link ID field, a Complete Profile field, an STA MAC Address Present field, a Beacon Interval Present field, a TSF Offset Present field, a BSS Parameters Change Count Present field, a mmWave Capabilities Information Present field, a Sector Sweep Parameters Present field, or a Reserved field.

For details of the STA Info field, reference may be made to FIG. 12, which are not described herein any further.

FIG. 15 is a schematic diagram of a format of an AP STA mmWave capabilities information element according to some embodiments of the present disclosure. The numbers below the fields represent octets or bits of the fields.

The AP STA mmWave capabilities information element is carried in the per-STA profile subelement or the per-mmWave STA profile subelement, the per-STA profile subelement or the per-mmWave STA profile subelement is carried in a basic multi-link element, and the basic multi-link element is carried in a beacon frame or a probe response frame. In some embodiments, the beacon frame or the probe response frame carrying the AP STA mmWave capabilities information element is transmitted by the AP MLD in the multi-link discovery stage, by the AP or STA in the multi-link association stage, or by the AP or STA in the multi-link reassociation stage.

The AP STA mmWave capabilities information element indicates mmWave capabilities information of the AP (MLD), and is also referred to as an AP mmWave capabilities information element.

The AP STA mmWave capabilities information element includes at least one of an Element ID field, a Length field, an Element ID Extension field, or an AP STA mmWave Capabilities Information field.

Settings of the Element ID field and the Element ID Extension field are listed in Table 3.

Table 3. Settings of the Element ID field and the Element ID Extension field in the mmWave capabilities information element

| Element | Element ID | Element ID Extension | Extensible | Fragmentable |
|---------|-----------|----------------------|------------|--------------|
| AP STA mmWave Capabilities Information | 255 | 136 | Yes | No |
| Non-AP STA mmWave Capabilities Information | 255 | 137 | Yes | No |

The AP STA mmWave Capabilities Information field is also referred to as an AP mmWave Capabilities Information field. The AP STA mmWave Capabilities Information field includes at least one of a Max Associated mmWave STA Number field, or a Power Source field, or a Reserved field.

For details of the AP STA mmWave Capabilities Information field, reference may be made to FIG. 11 to FIG. 14, which are not described herein any further.

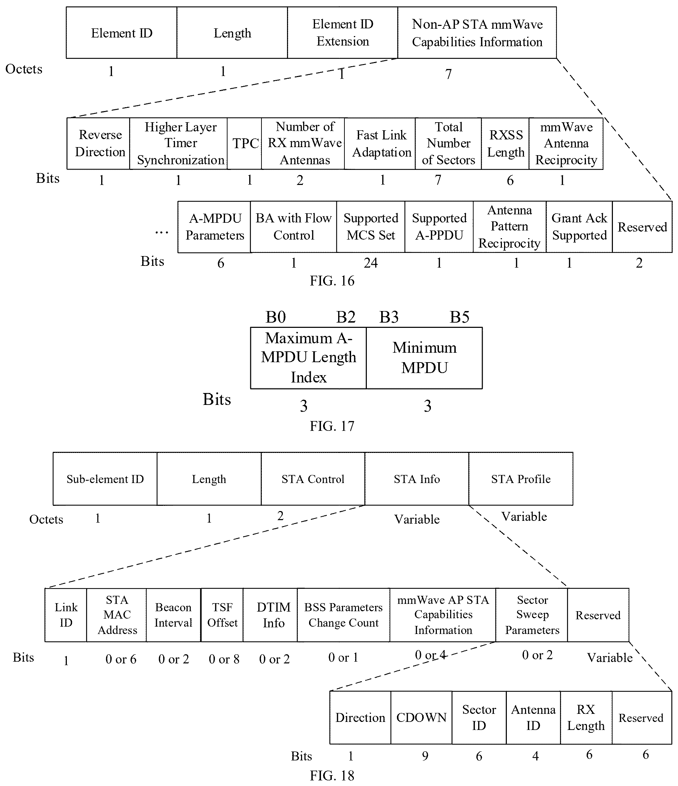

FIG. 16 is a schematic diagram of a format of a non-AP STA mmWave capabilities information element according to some embodiments of the present disclosure. The numbers below the fields represent octets or bits of the fields.

The non-AP STA mmWave capabilities information element is carried in the STA Profile field, the STA Profile field is carried in a basic multi-link element, and the basic multi-link element is carried in a beacon frame or a probe response frame. In some embodiments, the beacon frame or the probe response frame carrying the non-AP STA mmWave capabilities information element is transmitted by the non-AP MLD in the multi-link discovery stage, by the AP or STA in the multi-link association stage, or by the AP or STA in the multi-link reassociation stage.

The non-AP STA mmWave capabilities information element indicates mmWave capabilities information of the non-AP (MLD), and is also referred to as a non-AP mmWave capabilities information element.

The non-AP STA mmWave capabilities information element includes at least one of an Element ID field, a Length field, an Element ID Extension field, or a Non-AP STA mmWave Capabilities Information field.

For settings of the Element ID field and the Element ID Extension field, reference may be made to Table 3.

The Non-AP STA mmWave Capabilities Information field is also referred to as a Non-AP mmWave Capabilities Information field. The Non-AP STA mmWave Capabilities Information field includes at least one of the following fields.

- A Reverse Direction sub-field indicates whether the non-AP STA supports the reverse operation. The reverse operation improvs the air interface throughput and avoids contention for the channel access right in each time. Illustratively, in a case where the Reverse Direction sub-field takes a value of the second value (e.g., 1), the non-AP STA supports the reverse operation; or in a case where the Reverse Direction sub-field takes a value of the first value (e.g., 0), the non-AP STA does not support the reverse operation.
- A Higher Layer Timer Synchronization sub-field indicates whether the non-AP STA supports higher layer timer synchronization. Illustratively, in a case where the Higher Layer Timer Synchronization sub-field takes a value of the second value (e.g., 1), that the non-AP STA supports the higher layer timer synchronization; or in a case where the Higher Layer Timer Synchronization sub-field takes a value of the first value (e.g., 0), the non-AP STA does not support the higher layer timer synchronization.
- A Transmission Power Control (TPC) sub-field indicates whether the non-AP STA supports transmission power control. Illustratively, in a case where the TPC sub-field takes a value of the second value (e.g., 1), the non-AP STA supports TPC; or in a case where the TPC sub-field takes a value of the first value (e.g., 0), the non-AP STA does not support TPC.
- A Number of RX mmWave Antennas sub-field indicates a number of mmWave antennas of the non-AP STA. Illustratively, in a case where the number of mmWave antennas of the non-AP STA is a value of the Number of RX mmWave Antennas sub-field minus 1.
- A Fast Link Adaptation sub-field indicates whether the non-AP STA supports link adaptation. Illustratively, in a case where the Fast Link Adaptation sub-field takes a value of the second value (e.g., 1), the non-AP STA supports link adaptation; or in a case where the Fast Link Adaptation Sub-field takes a value of the first value (e.g., 0), the non-AP STA does not support link adaptation.
- A Total Number of Sectors sub-field indicates a total number of sectors of all mmWave antennas used by the non-AP STA in transmission sector sweep. Illustratively, in a case where the total number of sectors of all mmWave antennas used by the non-AP STA in transmission sector sweep is a value of the Total Number of Sectors sub-field minus 1. A RXSS Length field.
- A mmWave Antenna Reciprocity sub-field indicates whether an optimal transmitting mmWave antenna of the non-AP STA is the same as an optimal receiving mmWave antenna of the non-AP STA. Illustratively, in a case where the mmWave Antenna Reciprocity sub-field takes a value of the second value (e.g., 1), the optimal transmitting mmWave antenna of the non-AP STA is the same as the optimal receiving mmWave antenna of the non-AP STA; or in a case where the mmWave Antenna Reciprocity sub-field takes a value of the first value (e.g., 0), the optimal transmitting mmWave antenna of the non-AP STA is not the same as the optimal receiving mmWave antenna of the non-AP STA.
- An A-MPDU Parameters sub-field indicates A-MPDU parameters. Illustratively, the format of the A-MPDU Parameters sub-field is illustrated in FIG. 17, and the number below the field represents the bit of the field. The A-MPDU Parameters sub-field includes at least one of a Maximum A-MPDU Length Index field (with a bit from B0 to B2) or a Minimum MPDU field (with a bit from B3 to B5).
- A Block Acknowledgment (BA) with Flow Control sub-field indicates whether the non-AP STA supports a BA with flow control. Illustratively, in a case where the BA with Flow Control sub-field takes a value of the second value (e.g., 1), the non-AP STA supports the BA with flow control; or in a case where the BA with Flow Control sub-field takes a value of the first value (e.g., 0), the non-AP STA does not support the BA with flow control.

- A Supported Modulation and Coding Scheme (MCS) Set sub-field indicates a MCS set supported by the non-AP STA.
- A Supported A-PPDU sub-field indicates whether the non-AP STA supports PPDU aggregation. Illustratively, in a case where the A-PPDU support sub-field takes a value of the second value (e.g., 1), the non-AP STA supports the PPDU aggregation; or in a case where the A-PPDU support sub-field takes a value of the first value (e.g., 0), the non-AP STA does not support the PPDU aggregation.
- An Antenna Pattern Reciprocity sub-field indicates whether a transmit antenna pattern associated with an antenna weight vector (AWV) is the same as a receive antenna pattern associated with the same AWV. Illustratively, in a case where the Antenna Pattern Reciprocity sub-field takes a value of the second value (e.g., 1), the transmit antenna pattern associated with the AWV is the same as the receive antenna pattern associated with the same AWV; or in a case where the Antenna Pattern Reciprocity sub-field takes a value of the first value (e.g., 0), the transmit antenna pattern associated with the AWV is the different from the receive antenna pattern associated with the same AWV.
- A Grant Ack Supported sub-field indicates whether the non-AP STA supports to respond to a grant frame (Grant Frame) with a grant Ack frame.
- A Reserved field.

FIG. 18 is a schematic diagram of formats of fields carried in per-STA profile subelements according to some embodiments of the present disclosure. The numbers below the fields represent octets or bits of the fields.

The per-STA profile subelements are carried in an STA Profile field, the STA Profile field is carried in a basic multi-link element, and the basic multi-link element is carried in an association request frame. In some embodiments, the association request frame carrying the per-STA profile subelements is transmitted by the non-AP MLD in the multi-link discovery stage, by the AP or STA in the multi-link association stage, or by the AP or STA in the multi-link reassociation stage.

The per-STA profile subelements include fields indicating parameter related to the beamforming (training).

The per-STA profile subelement includes at least one of a Subelement ID field, a Length field, an STA Control field, an STA Info field, or an STA Profile field.

The STA Info field includes at least one of a Link ID field, an STA MAC Address field, a Beacon Interval field, a TSF Offset field, a Delivery Traffic Indication Map (DTIM) Info field, a BSS Parameters Change Count field, a mmWave AP STA Capabilities Information field, a Sector Sweep Parameters field, or a Reserved field.

The Sector Sweep Parameters field includes at least one of a Direction field, a Count Down (CDOWN) field, a Sector ID field, an Antenna ID field, an RX Length field, or a Reserved field.

The Direction field indicates whether the frame is transmitted by an initiator of beamforming (training) or a responder of beamforming (training). For example, in a case where the Direction field takes a value of the first value (e.g., 0), the frame is transmitted by the initiator of beamforming; or in a case where the Direction field takes a value of the second value (e.g., 1), the frame is transmitted by the responder of beamforming.

The CDOWN field indicates a number of beamforming frames remained prior to the end of the transmission of the beamforming frame (e.g., a sector sweep frame, and the like) by the sector sweep initiator (i.e., TX Sector Sweep), or a number of beamforming frames remained prior to the end of the transmission of the beamforming frame (e.g., a sector sweep frame, and the like) by the sector sweep responder (i.e., RX Sector Sweep). In the last frame of the transmission of the beamforming frames, the CDOWN field takes a value of 0. Illustratively, the value of the CDOWN field ranges from 0 to 511.

The Sector ID field indicates a sector number through which the frame including the field is transmitted.

In some embodiments, in a case where the non-AP MLD and the AP MLD establish the multi-link including the mmWave link, and a non-AP STA that is affiliated with the non-AP MLD and operates in the non-mmWave frequency band (e.g., the sub-7 GHz frequency band) transmits a multi-link (re)association request frame to an AP that is affiliated with the AP MLD and operates in the non-mmWave frequency band, a Link Info Field in a basic multi-link element carried in the (re)association request frame should carry a per-mmWave STA profile subelement. The per-mmWave STA profile subelement carries complete information of the mmWave STA.

In some embodiments, upon receiving the (re)association request frame, the AP that is affiliated with the AP MLD and operates in the non-mmWave frequency band checks parameters related to mmWave capabilities and beamforming (training), and responds to the (re)association request frame. For example, the AP transmits a (re)association response frame to the non-AP STA that is affiliated with the non-AP MLD and operates in the non-mmWave frequency band.

The per-mmWave STA profile subelement is carried in an STA Profile field, the STA Profile field is carried in a basic multi-link element, and the basic multi-link element is carried in the association request frame. In some embodiments, the association request frame carrying the per-mmWave STA profile subelements is transmitted by the non-AP MLD in the multi-link discovery stage, by the AP or STA in the multi-link association stage, or by the AP or STA in the multi-link reassociation stage.

The per-mmWave STA profile subelement includes fields indicating parameter related to the beamforming (training).

In some embodiments, for the format of the per-mmWave STA profile subelement, reference may be made to FIG. 17.

In some embodiments, the per-STA profile subelement and the per-mmWave STA profile subelement are distinguished by a value of the Subelement ID field. Illustratively, in a case where the Subelement ID field takes a value of the first value (e.g., 0), the subelement is the per-STA profile subelement; or in a case where the Subelement ID field takes a value of the second value (e.g., 1), the subelement is the per-mmWave STA profile subelement.

It should be understood that in the embodiments of the present disclosure, the formats, names, and values of the frames/elements/fields are merely exemplary and do not imply any limitation on the formats, names, and values of the frames/elements/fields. In different embodiments or different designs, a case where that at least one of the names of the elements/fields, the positions of the elements/fields in the frame, the arrangement order between of the elements/fields and other elements/fields, octets, or the bytes change is not excluded.

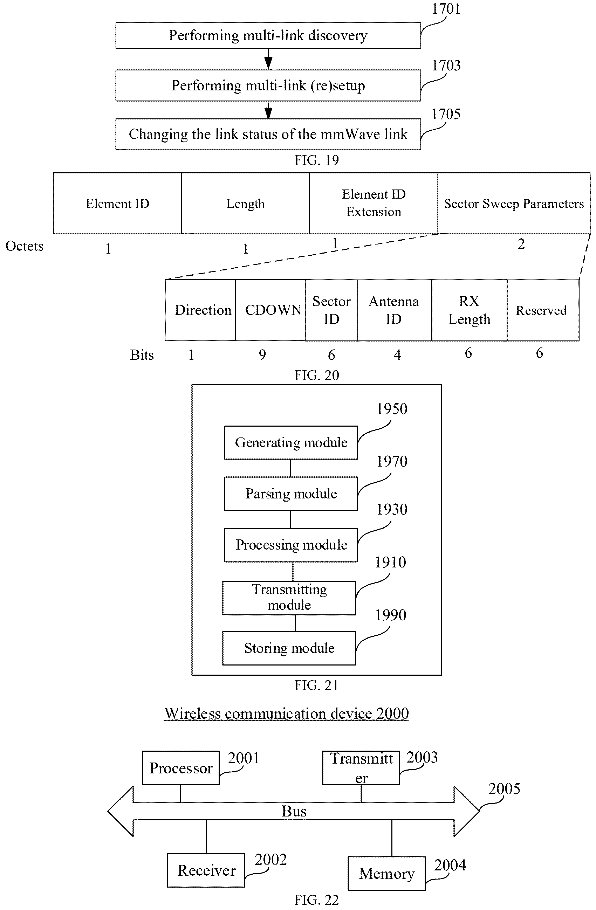

FIG. 19 is a flowchart of a method for transmitting frames according to some embodiments of the present disclosure. Using an example where the method is performed by at least one of an AP (MLD) or a non-AP (MLD), the method includes at least part of the following processes.

Both the AP MLD and the non-AP MLD support the multi-link capabilities (supports the MLO) and mmWave capabilities (supports for operation in the mmWave frequency band). At least two links between the AP MLD and the non-AP MLD include at least one link operating in the mmWave frequency band and at least one link operating at the non-mmWave frequency band. The following embodiments are illustrated using an example where at least two links operating at 2.4 GHz, 5 GHz, and 60 GHz are present between the AP MLD and the non-AP MLD.

**In S1701,** multi-link discovery is performed.

The non-AP MLD that supports the mmWave capabilities discovers the nearby AP MLD that supports the mmWave capabilities. The multi-link discovery stage is performed in two operation modes, that is, an active sweep mode and a passive sweep mode.

1. In the passive sweep mode, the beacon frame transmitted by the AP that is affiliated with the AP MLD supporting the mmWave capabilities and operates in the low-frequency band (at least one of 2.4 GHz or 5 GHz) carries a basic multi-link element, and the basic multi-link element carries capability information of the mmWave STA operating at the 60 GHz frequency band. The specific implementation modes include at least the following four modes.

(1) The Link Info field in the basic multi-link element includes the per-STA profile subelement, as illustrated in FIG. 11.

A value of the mmWave AP STA Capabilities Information Present field in the STA Control field in the per-STA profile subelement is set as the second value (e.g., 1) to indicate that the STA Info field includes a field indicating the mmWave AP STA capability information.

(2) The Link Info field in the basic multi-link element includes the per-mmWave STA profile subelement, as illustrated in FIG. 14.

A value of the mmWave AP STA Capabilities Information Present field in the STA Control field in the per-mmWave STA profile subelement is set as the second value (e.g., 1) to indicate that the STA Info field includes a field indicating the mmWave AP STA capability information.

(3) The Link Info field in the basic multi-link element includes the per-STA profile subelement. The STA Profile field in the per-STA profile subelement includes the mmWave AP capability information element or the mmWave AP STA capability information element (as illustrated in FIG. 13).

The format of the per-STA profile subelement. is the same as or different from above per-STA profile subelement. For example, the format of the per-STA profile subelement adopts the format of the per-STA profile subelement in some practices.

(4) The Link Info field in the basic multi-link element includes the per-mmWave STA profile subelement. The STA Profile field in the per-mmWave STA profile subelement includes the mmWave AP capability information element or the mmWave AP STA capability information element (as illustrated in FIG. 13).

2. In the active sweep mode, the non-AP STA that is affiliated with the non-AP MLD and operates in the low-frequency band (at least one of 2.4 GHz or 5 GHz) generates and transmits a probe request frame carrying the mmWave STA capability information. The process includes S1701a and S1701b.

In S1701a, the non-AP STA transmits the probe request frame.

The probe request frame carries an STA Profile field in the probe request multi-link element. The STA Profile field includes the non-AP STA mmWave capabilities information element (as illustrated in FIG. 16) to indicate the mmWave capabilities supported by the non-AP STA.

In S1701b, the non-AP STA receives the probe response frame.

The probe response frame is transmitted by the AP that is affiliated with the AP MLD supporting the mmWave capabilities and operates in the low-frequency band (at least one of 2.4 GHz or 5 GHz), and includes the basic multi-link element indicating the mmWave capabilities supported by the AP. The specific implementation modes include at least the following four modes.

(1) The Link Info field in the basic multi-link element includes the per-STA profile subelement, as illustrated in FIG. 11. A value of the mmWave AP STA Capabilities Information Present field in the STA Control field in the per-STA profile subelement is set as the second value (e.g., 1) to indicate that the STA Info field includes a field indicating the mmWave AP STA capability information.

(2) The Link Info field in the basic multi-link element includes the per-mmWave STA profile subelement, as illustrated in FIG. 14. A value of the mmWave AP STA Capabilities Information Present field in the STA Control field in the per-mmWave STA profile subelement is set as the second value (e.g., 1) to indicate that the STA Info field includes a field indicating the mmWave AP STA capability information.

(3) The Link Info field in the basic multi-link element includes the per-STA profile subelement. The STA Profile field in the per-STA profile subelement includes the mmWave AP capability information element or the mmWave AP STA capability information element (as illustrated in FIG. 13). The format of the per-STA profile subelement is the same as or different from above per-STA profile subelement. For example, the format of the per-STA profile subelement adopts the format of the per-STA profile subelement in some practices.

(4) The Link Info field in the basic multi-link element includes the per-mmWave STA profile subelement. The STA Profile field in the per-mmWave STA profile subelement includes the mmWave AP capability information element or the mmWave AP STA capability information element (as illustrated in FIG. 13).

**In S1703,** multi-link (re)setup is performed.

Upon the multi-link discovery stage, the multi-link (re)setup is performed between the non-AP STA that is affiliated with the non-AP MLD and operates in the low-frequency band (at least one of 2.4 GHz or 5 GHz) and the AP that is affiliated with the AP MLD and operates in the low-frequency band (at least one of 2.4 GHz or 5 GHz) by transmitting the re(association) request frame and the re(association) response frame. The non-AP MLD and the AP MLD performs the multi-link (re)setup via the low-frequency link (a link operating in at least one of 2.4 GHz or 5 GHz). The specific implementation modes include at least the following two modes.

(1) In negotiation process of the multi-link setup by the AP MLD and the non-AP MLD, in a case where the AP MLD and the non-AP MLD negotiate the TID-to-link mapping, all TIDs are mapped to all links operating at the sub-7 GHz frequency band in response to the default mode of the TID-to-link mapping; and the TID mapping to the mmWave link is not negotiated in a case where the TID-to-link mapping is performed to each link.

In addition, the AP MLD and the non-AP MLD further negotiates parameters related to the beamforming (training) required for the mmWave link. The non-AP MLD first transmits the associated request frame carrying the basic multi-link element, and the basic multi-link element includes the parameters related to the beamforming (training), as illustrated in FIG. 18.

Upon the multi-link setup according to the above rule, the link status of the mmWave link is the disabled status. The beamforming (training) operation is performed based on the negotiated parameters related to the beamforming (training). Upon the beamforming training, the mmWave AP in the AP MLD that operates in the mmWave frequency band the mmWave non-AP STA in the non-AP MLD that operates in the mmWave frequency band both acquire the optimal mmWave transmission parameters. Then, the AP MLD and the non-AP MLD negotiates the TID mapping to the mmWave link. In a case where the beamforming training operation is complete on the mmWave link, the TID-to-Link mapping negotiation is performed, and at least one TID is mapped to the mmWave link in at least one of the uplink direction or the downlink direction, the link status of the mmWave link changes to the enabled status; otherwise, the link status of the mmWave link is set as the disabled status.

Only the mmWave link in the enabled status is used by the non-AP MLD and the AP MLD for frame transmission.

(2) In negotiation process of the multi-link setup by the AP MLD and the non-AP MLD, in a case where the AP MLD and the non-AP MLD negotiate the TID-to-link mapping, all TIDs are mapped to all links operating at the sub-7 GHz frequency band in response to the default mode of the TID-to-link mapping, and the link status of the mmWave link is set as the enabled status. Otherwise, the link status of the mmWave link is set as the disabled status.

In addition, the AP MLD and the non-AP MLD further negotiates parameters related to the beamforming (training) required for the mmWave link.

The beamforming (training) operation is performed based on the negotiated parameters related to the beamforming (training). Upon the beamforming training, the mmWave AP in the AP MLD that operates in the mmWave frequency band the mmWave non-AP STA in the non-AP MLD that operates in the mmWave frequency band both acquire the optimal mmWave transmission parameters.

In a case where the TID-to-link mapping to the mmWave link has been negotiated between the AP MLD and the non-AP MLD prior to the beamforming training, and at least one TID is mapped to the mmWave link in at least one of the uplink direction or the downlink direction, the link status of the mmWave link changes to the enabled on usable status upon the beamforming training. Otherwise, in a case where the TID-to-link mapping to the mmWave link is negotiated between the AP MLD and the non-AP MLD prior to the beamforming training, the TID-to-link mapping to the mmWave link is negotiated upon the beamforming training. The negotiation of the TID-to-link mapping to the mmWave link includes an explicit negotiation mode and an implicit negotiation mode. Illustratively, the negotiation of the TID-to-link mapping to the mmWave link is performed by transmitting a TID-to-link mapping request frame and TID-to-link mapping response frame. in a case where the negotiation of the TID-to-link mapping to the mmWave link is complete, and at least one TID is mapped to the mmWave link in at least one of the uplink direction or the downlink direction, the link status of the mmWave link changes to the enabled on usable status. Only the mmWave link in the enabled status is used by the non-AP MLD and the AP MLD for frame transmission.

In a case where the beamforming fails, the link status of the mmWave link changes to the enabled on unusable status. The mmWave link in the enabled on unusable status is not used for frame transmission.

**In S1705,** the link status of the mmWave link changes.

In the use process of the mmWave link, the link quality may be less than the first threshold. For example, the link quality is poor due to movements of people, blocks, or movement of the device. In a case where the link quality of the mmWave link is less than the first threshold, the procedure is performed according to the following two processes.

(1) The mmWave link is in the enabled status, and the frame is transmitted between the AP MLD and the non-AP MLD. In a case where the link quality of the mmWave link is less than the first threshold, the link status of the mmWave link changes to the disabled status. The mmWave link in the disabled status is not used for frame transmission.

Then, the first duration is waited (e.g., the first duration is 550 ms in a case where the RSSI value is less than a 0 dB threshold; the first duration ranges from 300 to 450 ms in a case where the RSSI value is less than a 10 dB threshold; or the first duration ranges from 100 to 300 ms in a case where the RSSI value is less than a 20 dB threshold). Upon the first duration, frame is transmitted. In a case where the mmWave link recovers or the retransmission is successful within a number of retransmissions, the link status of the mmWave link is recovered to the enabled status. The mmWave link in the enabled status is used for frame transmission.

In a case where the frame transmission over the mmWave link still fails upon the first duration, the mmWave non-AP STA determines whether the mmWave non-AP STA is within the service range of the mmWave AP STA by monitoring the beacon frame transmitted by the mmWave AP STA, and the like.

In a case where the mmWave Non-AP STA is not within the service range of the mmWave AP STA, the mmWave Non-AP STA rediscovers a new mmWave AP STA, or waits until the mmWave non-AP STA reenters the service range of the original mmWave AP STA, and then the mmWave non-AP STA and the mmWave AP STA reestablish the association.

In a case where the mmWave non-AP STA is within the service range of the mmWave AP STA, the mmWave non-AP STA sets the link status of the mmWave link as the enabled status, reperforms the beamforming (training), and sets the link status upon completion of the beamforming (training).

(2) The link status of the mmWave link is the enabled on usable status, and the frame is transmitted between the AP MLD and the non-AP MLD. In a case where the link quality of the mmWave link is less than the first threshold, the link status of the mmWave link changes to the enabled on unusable status. The mmWave link in the enabled on unusable status is not used for frame transmission.

Then, the first duration is waited (e.g., the first duration is 550 ms in a case where the RSSI value is less than a 0 dB threshold; the first duration ranges from 300 to 450 ms in a case where the RSSI value is less than a 10 dB threshold; or the first duration ranges from 100 to 300 ms in a case where the RSSI value is less than a 20 dB threshold). Upon the first duration, frame is transmitted. In a case where the mmWave link recovers or the retransmission is successful within a number of retransmissions, the link status of the mmWave link is recovered to the enabled on usable status. The mmWave link in the enabled on usable status is used for frame transmission.

In a case where the frame transmission over the mmWave link still fails upon the first duration, the mmWave non-AP STA determines whether the mmWave non-AP STA is within the service range of the mmWave AP STA by monitoring the beacon frame transmitted by the mmWave AP STA, and the like.

In a case where the mmWave Non-AP STA is not within the service range of the mmWave AP STA, the mmWave Non-AP STA rediscovers a new mmWave AP STA, or waits until the mmWave non-AP STA reenters the service range of the original mmWave AP STA, and then the mmWave non-AP STA and the mmWave AP STA reestablish the association.

In a case where the mmWave non-AP STA is within the service range of the mmWave AP STA, the mmWave non-AP STA sets the link status of the mmWave link as the enabled status, reperforms the beamforming (training), and sets the link status upon completion of the beamforming (training).

The operation of reperforming the beamforming (training) in above two processes includes renegotiating the beamforming (training) parameters. Illustratively, the negotiation or renegotiation of the beamforming (training) parameters are achieved by transmitting an operating with the mmWave link request frame and an operating with mmWave link response frame.

Illustratively, the operating with the mmWave link request frame is listed in Table 4, and the operating with mmWave link response frame is listed in Table 5. The EHT is short for the extremely high throughput.

Table 4 The operating with the mmWave link request frame

| Order | Information |
|---|---|
| 1 | Category |
| 2 | Protected EHT Action |
| 3 | Dialog Token |
| 4 | mmWave Link Negotiation |

Table 5 The operating with mmWave link response frame

| Order | Information |
|---|---|
| 1 | Category |
| 2 | Protected EHT Action |
| 3 | Dialog Token |
| 4 | Status Code |
| 5 | mmWave Link Negotiation |

The Category field is listed in Table 6, and the Protected EHT Action field is listed in Table 7, and the Status Code field is listed in Table 8.

Table 6 The Category field

| Code | Meaning | See subclause | Robust | Group addressed privacy |
|---|---|---|---|---|
| 36 | EHT | 9.6.34(EHT Action frame details) | No | No |
| 37 | Protected EHT | 9.6.35(Protected EHT Action frame details) | Yes | No |

Table 7 The Protected EHT Action field

| Value | Meaning | Time priority |
|---|---|---|
| 7 | Operating with mmWave Link Request | No |
| 8 | Operating with mmWave Link Response | No |

A value of the Dialog Token field in the operating with the mmWave link request frame includes a non-zero value selected and set by the initiator of the mmWave communication.

Table 8 The Status Code field

| Status | Name | Meaning |
|---|---|---|
| 136 | Preferred Beamform Parameters | Not accepting the beamform parameters of the initiator and providing some preferred beamform parameters |

(continued)

| Status | Name | Meaning |
|---|---|---|
| 137 | DENIED_mmWave_Link_Negotiati on OTHER REASON | Denying the negotiation of the mmWave link due to some factors beyond the standard range |

The mmWave Link Negotiation Field is illustrated in FIG. 20. For meanings and designs of various fields, reference may be made to FIG. 11 to FIG. 18, which are not described herein any further.

In summary, in the method according to the present disclosure, the link status of the mmWave link is newly defined, and the mmWave link in the newly-defined enabled status or enabled on usable status is used for the frame transmission. The newly-defined enabled status provides more superior and valid transmission parameters for the mmWave link, such that the spectrum occupancy rate is improved, the power and loss of the wireless device are reduced, the frame transmission success rate is improved, and the transmission performance, the stability, and the communication quality of the mmWave link are further improved. In addition, various change conditions and change methods between different link status are provided, such that the feasibility and flexibility of use of the mmWave link are improved. In addition, the designs of the frame formats used in various stages of the multi-link operation are provided to offer feasibility for negotiation, setup, and status change of the mmWave link.

FIG. 21 is a block diagram of an apparatus for transmitting frames according to some embodiments of the present disclosure. The apparatus includes at least some of a transmitting module 1910, a processing module 1930, a generating module 1950, a parsing module 1970, or a storing module 1990.

The transmitting module 1910 is configured to perform processes related to transmission in the method embodiments.

The processing module 1930 is configured to perform processes related to determining and processing in the method embodiments.

The generating module 1950 is configured to generate information related to the apparatus. Illustratively, in the multi-link discovery stage, the generating module 1950 is configured to generate the mmWave capabilities element based on the mmWave capabilities of the apparatus, and carry at least one of the first frame, the second frame, or the third frame; in the multi-link setup stage, the generating module 1950 is further configured to generate information related to the mmWave capabilities; and in the multi-link negotiation stage, the generating module 1950 is further configured to generate the operating with mmWave link request/response frame based on the mmWave capabilities.

In some embodiments, the transmitting module 1910 is configured to transmit any one of more types of information generated by the generating module 1950.

In some embodiments, the apparatus further includes the parsing module 1970 is configured to parse received indication information. In the multi-link discovery stage, the parsing module 1970 is configured to parse and acquire the mmWave capabilities of the peer device based on at least one of the received first frame, the received second frame, or the received third frame; in the multi-link setup stage, the parsing module 1970 is further configured to parse and acquire information related to the mmWave capabilities; and in the multi-link negotiation stage, the parsing module 1970 is further configured to parse the received operating with mmWave link request/response frame.

In some embodiments, the apparatus further includes the storing module 1990, configured to store at least one of information received by the transmitting module 1910, information generated by the generating module 1950, or information parsed by the parsing module 1970.

In summary, in the method according to the present disclosure, the link status of the mmWave link in transmitting the first frame over the mmWave link is defined, such that the communication quality of the mmWave communication is effectively improved, the failure rate of the mmWave communication is reduced, and the resource waste is mitigated. In addition, use of the mmWave link is further supported by transmitting the second frame and the third frame, such that the MLD acquires the mmWave capabilities information via the second frame and information related to the beamforming via the third frame. Thus, the stability and flexibility of the use of mmWave link are improved, the spectrum utilization rate is improved, and the resource waste is mitigated. In addition, the designs of the frame formats used in various stages of the multi-link operation are provided to offer feasibility for negotiation, setup, and status change of the mmWave link.

It should be noted that, in a case where the apparatus according to the above embodiments implements the functions thereof, the functional modules are merely exemplarily defined in terms of name and functionality. In practice, the above functions may be assigned to and implemented by different functional modules according to actual needs, that is, the apparatus may be divided into different functional modules, to implement all or part of the above functions.

With regard to the apparatus in the above embodiments, the specific manner in which each module performs operations has been described in detail in the embodiments related to the method and is not described in detail herein.

FIG. 22 is a schematic structural diagram of a wireless communication device (an AP or STA) according to some embodiments of the present disclosure. The wireless communication device 2000 includes: a processor 2001, a receiver 2002, a transmitter 2003, a memory 2004, and a bus 2005.

The processor 2001 includes one or more processing cores, and achieves various functional applications and information processing by running software programs and modules.

The receiver 2002 and the transmitter 2003 are practiced as a communication assembly. The communication assembly is a communication chip, and is also referred to as a transceiver. In some embodiments, the transceiver is configured to achieve the function and processes of the first transmitting module 2410, the second transmitting module 2420, and the third transmitting module 2610.

The memory 2004 is communicably connected to the processor 2001 via the bus 2005.

The memory 2004 is configured to store one or more instructions, and the processor 2001, when loading and executing the one or more instructions, is caused to perform various processes in the above method embodiments.

In addition, the memory 2004 is practiced by any type of volatile or non-volatile storage device or combinations thereof. The volatile or non-volatile storage device includes, but is not limited to, a disk or optical disc, an electrically erasable programmable read-only memory (EEPROM), an erasable programmable read-only memory (EPROM), a persistent random-access memory (SRAM), a read-only memory (ROM), a magnetic memory, a flash memory, or a programmable read-only memory (PROM).

In some embodiments, the receiver 2002 receives signals/data independently, the processor 2001 controls the receiver 2002 to receive signals/data, the processor 2001 requests the receiver 2002 to receive signals/data, or the processor 2001 cooperates with the receiver 2002 to receive signals/data.

In some embodiments, the transmitter 2003 transmits signals/data independently, the processor 2001 controls the transmitter 2003 to transmit signals/data, the processor 2001 requests the transmitter 2003 to transmit signals/data, or the processor 2001 cooperates with the transmitter 2003 to transmit signals/data.

Some embodiments of the present disclosure further provide a computer-readable storage medium storing one or more instructions, one or more programs, a code set, or an instruction set, wherein the one or more instructions, the one or more programs, the code set, or the instruction set, when loaded and run by a processor cause the processor to perform the negotiation method for fast access point transition in the above method embodiments.

Some embodiments of the present disclosure further provide a computer program product or a computer program. The computer program product or the computer program, when running on a processor causes the station device or the access point device to perform the negotiation method for fast access point transition in the above method embodiments.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

**Claims**

1. A method for determining link statuses, performed by a multi-link device (MLD), the method comprising:
   determining a link status of a mmWave link based on whether beamforming training is complete.

2. The method according to claim 1, wherein determining the link status of the mmWave link based on whether the beamforming training is complete comprises:
   determining the link status of the mmWave link based on whether the beamforming training is complete and whether a communication requirement between two MLDs corresponding to the mmWave link is satisfied.

3. The method according to claim 1 or 2, wherein the link status comprises at least one of a first status (enabled) or a second status (non-enabled).

4. The method according to claim 3, wherein determining the link status of the mmWave link based on whether the beamforming training is complete comprises:

   determining the link status of the mmWave link as the first status in a case where the beamforming training has been completed on the mmWave link and at least one traffic identifier (TID) is mapped to the mmWave link in an uplink direction or a downlink direction; or

determining the link status of the mmWave link as the first status in a case where the beamforming training has been completed on the mmWave link, a communication requirement between two MLDs corresponding to the mmWave link is satisfied, and at least one TID is mapped to the mmWave link in an uplink direction or a downlink direction.

5. The method according to claim 4, wherein determining the link status of the mmWave link based on whether the beamforming training is complete comprises:

determining the link status of the mmWave link as the first status in a case where the beamforming training has been completed on the mmWave link, TID-to-link mapping is complete on the mmWave link, and the at least one TID is mapped to the mmWave link in the uplink direction or the downlink direction;

determining the link status of the mmWave link as the first status in a case where the mmWave link has been established, the beamforming training has been completed on the mmWave link, TID-to-link mapping is complete on the mmWave link, and the at least one TID is mapped to the mmWave link in the uplink direction or the downlink direction;

determining the link status of the mmWave link as the first status in a case where the beamforming training has been completed on the mmWave link, the communication requirement between the two MLDs corresponding to the mmWave link is satisfied, TID-to-link mapping is complete on the mmWave link, and the at least one TID is mapped to the mmWave link in the uplink direction or the downlink direction; or

determining the link status of the mmWave link as the first status in a case where the mmWave link has been established, the beamforming training has been completed on the mmWave link, the communication requirement between the two MLDs corresponding to the mmWave link is satisfied, TID-to-link mapping is complete on the mmWave link, and the at least one TID is mapped to the mmWave link in the uplink direction or the downlink direction.

6. The method according to any one of claims 3 to 5, wherein determining the link status of the mmWave link based on whether the beamforming training is complete comprises:

determining the link status of the mmWave link as the second status in a case where the beamforming training is not complete on the mmWave link and/or no traffic identifier (TID) is mapped to the mmWave link in an uplink direction or a downlink direction; or

determining the link status of the mmWave link as the second status in a case where the beamforming training is not complete on the mmWave link, and/or a communication requirement between two MLDs corresponding to the mmWave link is not satisfied, and/or no TID is mapped to the mmWave link in an uplink direction or a downlink direction.

7. The method according to any one of claims 4 to 6, further comprising at least one of:

determining that the link status of the mmWave link changes from the first status to the second status in a case where a link quality of the mmWave link is less than a first threshold; or

determining that the link status of the mmWave link changes from the first status to the second status in a case where a link quality of the mmWave link is less than a first threshold and the link quality of the mmWave link remains less than the first threshold for a first duration.

8. The method according to any one of claims 4 to 7, further comprising at least one of:

determining that the link status of the mmWave link changes from the second status to the first status in a case where a link quality of the mmWave link is greater than a second threshold; or

determining that the link status of the mmWave link changes from the second status to the first status in a case where a link quality of the mmWave link is greater than a second threshold and the link quality of the mmWave link remains greater than the second threshold for a second duration.

9. The method according to any one of claims 3 to 8, further comprising at least one of:

not performing TID-to-link mapping of the mmWave link in a setup stage of the mmWave link; or

performing TID-to-link mapping of the mmWave link in a case where the mmWave link has been established and the beamforming training has been completed.

10. The method according to claim 1 or 2, wherein the link status comprises at least one of a first status (enabled on usable), a second status (enabled on unusable), an enabled status, or a non-enabled status.

11. The method according to claim 10, wherein determining the link status of the mmWave link based on whether the beamforming training is complete comprises:

determining the link status of the mmWave link as the first status in a case where the mmWave link is in the enabled status and the beamforming training has been completed on the mmWave link; or
determining the link status of the mmWave link as the first status in a case where the mmWave link is in the enabled status, the beamforming training has been completed on the mmWave link, and a communication requirement between two MLDs corresponding to the mmWave link is satisfied.

12. The method according to claim 10 or 11, wherein determining the link status of the mmWave link based on whether the beamforming training is complete comprises:

determining the link status of the mmWave link as the second status in a case where the mmWave link is in the enabled status and the beamforming training is not complete on the mmWave link; or
determining the link status of the mmWave link as the second status in a case where the mmWave link is in the enabled status, and the beamforming training is not complete on the mmWave link and/or a communication requirement between two MLDs corresponding to the mmWave link is not satisfied.

13. The method according to claim 10 or 11, further comprising at least one of:

determining the link status of the mmWave link as the enabled status in a case where the mmWave link has been established and at least one traffic identifier (TID) is mapped to the mmWave link in an uplink direction or a downlink direction;
determining that the link status of the mmWave link changes from the non-enabled status to the enabled status in a case where the mmWave link is in the non-enabled status and at least one TID is mapped to the mmWave link in an uplink direction or a downlink direction; or
determining that the link status of the mmWave link changes from the non-enabled status to the enabled status in a setup process of the mmWave link in a case where the mmWave link is in the non-enabled status and at least one TID is mapped to the mmWave link in an uplink direction or a downlink direction.

14. The method according to any one of claims 11 to 13, further comprising at least one of:

determining the link status of the mmWave link as the non-enabled status in a case where the mmWave link has been established and no traffic identifier (TID) is mapped to the mmWave link in an uplink direction or a downlink direction;
determining the link status of the mmWave link as the non-enabled status in a setup process of the mmWave link in a case where no TID is mapped to the mmWave link in an uplink direction or a downlink direction; or
determining the link status of the mmWave link as the non-enabled status in a case where no TID is mapped to the mmWave link in an uplink direction or a downlink direction.

15. The method according to any one of claims 11 to 14, further comprising at least one of:

determining that the link status of the mmWave link changes from the first status to the second status in a case where a link quality of the mmWave link is less than a first threshold; or
determining that the link status of the mmWave link changes from the first status to the second status in a case where a link quality of the mmWave link is less than a first threshold and the link quality of the mmWave link remains less than the first threshold for a first duration.

16. The method according to any one of claims 11 to 15, further comprising at least one of:

determining that the link status of the mmWave link changes from the second status to the first status in a case where a link quality of the mmWave link is greater than a second threshold; or
determining that the link status of the mmWave link changes from the second status to the first status in a case where a link quality of the mmWave link is greater than a second threshold and the link quality of the mmWave link is greater than the second threshold remains for a second duration.

17. The method according to any one of claims 11 to 16, further comprising:
determining that the link status of the mmWave link changes from the second status to the enabled status in a case where the mmWave link is in the second status and a link quality of the mmWave link is less than a third threshold.

18. The method according to any one of claims 11 to 17, further comprising at least one of:

determining that the link status of the mmWave link changes from the second status to the non-enabled status in a case where the mmWave link is in the second status and the MLD does not transmit a frame via the the mmWave link within a third duration;
determining that the link status of the mmWave link changes from the second status to the non-enabled status in a case where the mmWave link is in the second status and the MLD transmits a disassociation frame; or
reestablishing the mmWave link in a case where the mmWave link is in the second status and the MLD is reassociated with another MLD.

19. The method according to any one of claims 11 to 18, further comprising:
determining that the link status of the mmWave link changes from the non-enabled status to the first status in a case where the mmWave link is in the non-enabled status, the beamforming training is recompleted on the mmWave link, and at least one traffic identifier (TID) is mapped to the mmWave link in an uplink direction or a downlink direction.

20. The method according to any one of claims 1 to 19, further comprising:

establishing the mmWave link upon completion of the beamforming training on the mmWave link; or
performing the beamforming training on the mmWave link upon setup of the mmWave link.

21. The method according to any one of claims 1 to 20, further comprising:
transmitting a first frame over the mmWave link in a case where the mmWave link is in a first status.

22. The method according to claim 21, wherein the first frame comprises at least one of a management frame, a quality of service (QoS) null frame, a control frame, or a data frame.

23. The method according to any one of claims 1 to 22, further comprising:
transmitting a frame associated with the beamforming training over the mmWave link in a case where the mmWave link is in a second status.

24. The method according to any one of claims 1 to 23, further comprising:
transmitting a second frame over the mmWave link or a link other than the mmWave link, wherein the second frame is configured for use in at least one of a multi-link discovery stage, a multi-link association stage, or a multi-link reassociation stage.

25. The method according to claim 24, wherein the second frame comprises a field indicating mmWave capabilities of an access point (AP).

26. The method according to claim 24 or 25, wherein a basic multi-link element in the second frame comprises a first subelement, wherein the first subelement indicates station (STA) profile information.

27. The method according to claim 26, wherein a first field in the first subelement comprises a first sub-field and a second sub-field, wherein the first sub-field comprises at least one of a field indicating STA control information or a field indicating STA information, the first sub-field indicates that mmWave access point (AP) STA capability information is present, and the second sub-field indicates the mmWave AP STA capability information.

28. The method according to claim 24 or 25, wherein the second frame comprises a second subelement, wherein the second subelement indicates mmWave station (STA) profile information.

29. The method according to claim 28, wherein the second subelement comprises at least one of an Element Identifier field, a Length field, an STA Control Information field, an STA Information field, or an STA Profile Information field.

30. The method according to claim 29, wherein at least one of the STA Control Information field or the STA Information field comprise a first sub-field and a second sub-field, wherein the first sub-field indicates that mmWave access point (AP) STA capability information is present, and the second sub-field indicates the mmWave AP STA capability information.

31. The method according to any one of claims 28 to 30, wherein the second frame carries at least one of a first subelement or the second subelement, wherein at least one of the first subelement or the second subelement carries a third subelement, wherein the third subelement indicates access point (AP) STA mmWave capabilities information.

32. The method according to claim 31, wherein the third subelement carries at least one of an Element Identifier field, a Length field, an Element Identifier Extension field, or an AP STA mmWave capabilities Information field.

33. The method according to claim 32, wherein the AP STA mmWave Capabilities Information field carries at least one of a Maximum Associated mmWave STA Number field, a Power Source field, or a Reserved field.

34. The method according to claim 24, wherein the second frame comprises a field indicating mmWave capabilities of a station (STA).

35. The method according to claim 34, wherein the second frame comprises at least one of an Element Identifier field, a Length field, an Element Identifier Extension field, or a non-access point (AP) STA mmWave Capabilities Information field.

36. The method according to claim 35, wherein the non-AP STA mmWave Capabilities Information field comprises at least one of: a Reverse Direction sub-field, a Higher Layer Timer Synchronization sub-field, a Transmission Power Control sub-field, a Number of Receive mmWave Antennas sub-field, a Fast Link Adaptation sub-field, a Total Number of Sectors sub-field, a mmWave Antenna Reciprocity sub-field, an Aggregate-Medium Access Control (MAC) Protocol Data Unit (A-MPDU) Parameters sub-field, a Black Acknowledgment (BA) with Flow Control sub-field, a Supported Modulation and Coding Scheme (MCS) Set sub-field, an Aggregate-Physical Protocol Date Unit (A-PPDU) sub-field, an Antenna Direction Pattern Reciprocity sub-field, or a Grant Ack Supported sub-field.

37. The method according to any one of claims 1 to 36, further comprising:
transmitting a third frame over the mmWave link or a link other than the mmWave link, wherein the third frame is configured for use in at least one of a multi-link setup stage, a multi-link association stage, or a multi-link reassociation stage.

38. The method according to claim 37, wherein the third frame comprises a field indicating parameters related to the beamforming training.

39. The method according to claim 38, wherein a basic multi-link element in the third frame comprises a first subelement, wherein the first subelement indicates station (STA) profile information.

40. The method according to claim 38, wherein the third frame carries a second subelement, wherein the second subelement indicates mmWave station (STA) profile information.

41. The method according to claim 39 or 40, wherein a first field in at least one of the first subelement or a second subelement comprises a third sub-field and a fourth sub-field, wherein the first field comprises at least one of a field indicating STA control information or a field indicating STA information, the third sub-field indicates that sector sweep parameter information is present, and the fourth sub-field indicates the sector sweep parameter information.

42. The method according to claim 41, wherein the fourth sub-field comprises a Direction field, a Count Down field, a Sector Identifier field, an Antenna Identifier field, a Receiver Length field, or a Reserved field.

43. An apparatus for determining link statuses, comprising:
a determining module, configured to determine a link status of a mmWave link based on whether beamforming training is complete.

44. A method for transmitting frames, performed by a multi-link device (MLD), the method comprising:
transmitting a first frame on a mmWave link in a first status, wherein the first status indicates that beamforming training has been completed on the mmWave link and at least one traffic identifier (TID) is mapped to the mmWave link in an uplink direction or a downlink direction.

45. The method according to claim 44, wherein the first status further indicates at least one of following items: the mmWave link has been established, beamforming has been completed on the mmWave link, TID-to-link mapping has been completed on the mmWave link, or the mmWave link satisfies a communication requirement between two MLDs corresponding to the mmWave link.

46. The method according to claim 44 or 45, further comprising at least one of:

> not transmitting the first frame over the mmWave link in a second status; or
> transmitting a frame associated with the beamforming training over a mmWave link in a second status, wherein the second status indicates that the beamforming training is not complete on the mmWave link and/or no TID is mapped to the mmWave link in the uplink direction or the downlink direction.

47. The method according to claim 46, wherein the second status further indicates at least one of following items: the mmWave link is not established, beamforming is not complete on the mmWave link, TID-to-link mapping is not complete on the mmWave link, a link quality of the mmWave link is less than a first threshold, or the mmWave link does not satisfy a communication requirement between two MLDs corresponding to the mmWave link.

48. The method according to any one of claims 44 to 47, wherein the first status is an enabled status or an enabled on usable status.

49. The method according to claim 48, wherein in a case where the first status is the enabled status, a second status is a non-enabled status.

50. The method according to claim 48 or 49, wherein in a case where the first status is an enabled status, the method further comprises at least one of:

> not performing TID-to-link mapping of the mmWave link in a setup stage of the mmWave link; or
> performing TID-to-link mapping of the mmWave link in a case where the mmWave link has been established and the beamforming training has been completed.

51. The method according to claim 48, wherein in a case where the first status is the enabled on usable status, a second status is an enabled on unusable status.

52. The method according to claim 48 or 51, wherein prior to transmitting the first frame over the mmWave link in the first status, the method further comprises:
determining the link status of the mmWave link as the enabled on usable status in a case where the mmWave link is in the enabled status and the beamforming training has been completed on the mmWave link.

53. The method according to any one of claims 48 to 52, further comprising:
changing the link status of the mmWave link from a second status to the first status in a case where a first condition is satisfied.

54. The method according to claim 53, wherein the first condition comprises at least one of following items: the second status remains for a first duration, or a link quality of the mmWave link is greater than a second threshold.

55. The method according to any one of claims 44 to 54, wherein in a case where a second condition is satisfied, the method further comprises at least one of:

> reperforming the beamforming training on the mmWave link;
> reperforming beamforming on the mmWave link;
> rediscovering another MLD; or
> reestablishing the mmWave link.

56. The method according to claim 55, wherein the second condition comprises at least one of following items: the second status remains for a second duration, or a link quality of the mmWave link is less than a third threshold.

57. The method according to any one of claims 44 to 56, wherein the first frame comprises at least one of a management frame, a quality of service (QoS) null frame, a control frame, or a data frame.

58. The method according to any one of claims 44 to 57, further comprising:
transmitting a second frame over the mmWave link or a link other than the mmWave link, wherein the second frame is configured for use in at least one of a multi-link discovery stage, a multi-link association stage, or a multi-link reassociation stage.

59. The method according to claim 58, wherein the second frame comprises a field indicating mmWave capabilities of an access point (AP).

60. The method according to claim 58 or 59, wherein a basic multi-link element in the second frame comprises a first subelement, wherein the first subelement indicates station (STA) profile information.

61. The method according to claim 60, wherein a first field in the first subelement comprises a first sub-field and a second sub-field, wherein the first sub-field comprises at least one of a field indicating STA control information or a field indicating STA information, the first sub-field indicates that mmWave access point (AP) STA capability information is present, and the second sub-field indicates the mmWave AP STA capability information.

62. The method according to claim 58 or 59, wherein the second frame comprises a second subelement, wherein the second subelement indicates mmWave station (STA) profile information.

63. The method according to claim 62, wherein the second subelement comprises at least one of an Element Identifier field, a Length field, an STA Control Information field, an STA Information field, or an STA Profile Information field.

64. The method according to claim 63, wherein at last one of the STA Control Information field or the STA Information field comprises a first sub-field and a second sub-field, wherein the first sub-field indicates that mmWave access point (AP) STA capability information is present, and the second sub-field indicates the mmWave AP STA capability information.

65. The method according to any one of claims 60 to 64, wherein the second frame carries at least one of the first subelement or a second subelement, wherein at least one of the first subelement or the second subelement carries a third subelement, wherein the third subelement indicates access point (AP) STA mmWave capabilities information.

66. The method according to claim 65, wherein the third subelement carries at least one of an Element Identifier field, a Length field, an Element Identifier Extension field, or an AP STA mmWave Capabilities Information field.

67. The method according to claim 66, wherein the AP STA mmWave Capabilities Information field carries at least one of a Maximum Associated mmWave STA Number field, a Power Source field, or a Reserved field.

68. The method according to claim 58, wherein the second frame comprises a field indicating mmWave capabilities of a station (STA).

69. The method according to claim 68, wherein the second frame comprises at least one of an Element Identifier field, a Length field, an Element Identifier Extension field, or a non-access point (AP) STA mmWave Capabilities Information field.

70. The method according to claim 69, wherein the non-AP STA mmWave Capabilities Information field comprises at least one of: a Reverse Direction sub-field, a Higher Layer Timer Synchronization sub-field, a Transmission Power Control sub-field, a Number of Receive mmWave Antennas sub-field, a Fast Link Adaptation sub-field, a Total Number of Sectors sub-field, a mmWave Antenna Reciprocity sub-field, an Aggregate-Medium Access Control (MAC) Protocol Data Unit (A-MPDU) Parameters sub-field, a Black Acknowledgment (BA) with Flow Control sub-field, a Supported Modulation and Coding Scheme (MCS) Set sub-field, an Aggregate-Physical Protocol Date Unit (A-PPDU) sub-field, an Antenna Direction Pattern Reciprocity sub-field, or a Grant Ack Supported sub-field.

71. The method according to any one of claims 44 to 70, further comprising:
transmitting a third frame over the mmWave link or a link other than the mmWave link, wherein the third frame is configured for use in at least one of a multi-link setup stage, a multi-link association stage, or a multi-link reassociation stage.

72. The method according to claim 71, wherein the third frame comprises a field indicating parameters related to the beamforming training.

73. The method according to claim 72, wherein a basic multi-link element in the third frame comprises a first subelement, wherein the first subelement indicates station (STA) profile information.

74. The method according to claim 72, wherein the third frame carries a second subelement, wherein the second subelement indicates mmWave station (STA) profile information.

75. The method according to claim 73 or 74, wherein a first field in at least one of the first subelement or a second subelement comprises a third sub-field and a fourth sub-field, wherein the first field comprises at least one of a field indicating STA control information or a field indicating STA information, the third sub-field indicates that sector sweep parameter information is present, and the fourth sub-field indicates the sector sweep parameter information.

76. The method according to claim 75, wherein the fourth sub-field comprises a Direction field, a Count Down field, a Sector Identifier field, an Antenna Identifier field, a Receiver Length field, or a Reserved field.

77. An apparatus for transmitting frames, comprising:
a transmitting module, configured to transmit a first frame on a mmWave link in a first status, wherein the first status indicates that beamforming training is complete on the mmWave link and at least one traffic identifier (TID) is mapped to the mmWave link in an uplink direction or a downlink direction.

78. A wireless device, comprising: a processor, a transceiver communicably connected to the processor, and a memory storing one or more instructions executable by the processor; wherein the processor is configured to load and execute the one or more executable instructions to cause the wireless device to perform the method for determining link statuses as defined in any one of claims 1 to 42 or the method for transmitting frames as defined in any one of claims 44 to 76.

79. A computer-readable storage medium, storing one or more executable instructions, wherein the one or more executable instructions, when loaded and executed by a processor cause the processor to perform the method for determining link statuses as defined in any one of claims 1 to 42 or the method for transmitting frames as defined in any one of claims 44 to 76.

80. A chip, comprising: programmable logic circuitry and/or program instructions, wherein the chip is configured to perform the method for determining link statuses as defined in any one of claims 1 to 42 or the method for transmitting frames as defined in any one of claims 44 to 76.

81. A computer program product, comprising: one or more computer instructions, wherein the one or more computer instructions are stored in a computer-readable storage medium, and when read and executed by a processor of a computer device, cause the computer device to perform the method for determining link statuses as defined in any one of claims 1 to 42 or the method for transmitting frames as defined in any one of claims 44 to 76.

82. A computer program, comprising: one or more computer instructions, wherein the one or more computer instructions, when read and executed by a processor of a computer device, cause the computer device to perform the method for determining link statuses as defined in any one of claims 1 to 42 or the method for transmitting frames as defined in any one of claims 44 to 76.

| Beacon frame or probe request frame/probe response frame (broadcast or unicast) | → | Multi-link probe request frame/probe response frame (unicast) | → | Multi-link setup (request frame/ response frame, unicast) |

FIG. 1

Wi-Fi signal

AP 210    Non-AP STA 220

FIG. 2

Transmitting a first frame over a mmWave link in a first status    320

FIG. 3

Transmitting a first frame over a mmWave link in a first status    410

↓

Not transmitting the first frame over a mmWave link in a second status, or transmitting a frame associated with beamforming training over a mmWave link in a second status    420

↓

Changing a link status of the mmWave link from the second status to the first status in a case where a third condition is satisfied    430

↓

Performing a first operation in a case where a fourth condition is satisfied    440

↓

Transmitting a second frame    450

↓

Transmitting a third frame    460

FIG. 4

Determining a link status of a mmWave link based on whether beamforming training is complete — 510

Transmitting a first frame over the mmWave link in a case where the mmWave link is in a first status — 530

Transmitting a frame associated with beamforming training over the mmWave link in a case where the mmWave link is in a second status — 550

Transmitting a second frame — 570

Transmitting a third frame — 590

FIG. 5

FIG. 6

(Re)completion of the beamforming training on
the mmWave link and negotiation of the TID-
to-link mapping, and at least one TID being
mapped to the mmWave link in an uplink
direction or a downlink direction; or recovery
of the mmWave link

Successful
(re)association (o TID
being mapped to the
mmWave link in the
uplink direction and the
downlink direction)

```
┌─────────┐          ┌─────────┐          ┌──────────────┐
│ Enabled │ ◄─────── │ Disabled │ ◄─────── │ Starting link │
│ status  │ ───────► │ status   │          │ setup (or     │
└─────────┘          └─────────┘          │ resetup)      │
                                          └──────────────┘
```

Disconnection of the mmWave link being not instant
disconnection, failure of (re)beamforming training,
success in (re)negotiation of the TID-to-link mapping
to the mmWave link and no TID being mapped to the
mmWave link in the uplink direction and the downlink
direction, no TID being mapped to the mmWave link
in the uplink direction and the downlink direction,
and/or the mmWave link being not recovered

FIG. 7

```
┌─────────────────────────────────────────┐
│ Transmitting frame carrying mmWave       │  801
│ capabilities information                 │
└─────────────────────────────────────────┘
               │
               ▼
┌─────────────────────────────────────────┐
│ Transmitting a multi-link probe request  │  802
│ frame and a multi-link probe response    │
│ frame                                     │
└─────────────────────────────────────────┘
               │                              803
               ▼
┌─────────────────────────────────────────┐
│ (Re)establishing a multi-link            │
└─────────────────────────────────────────┘
               │                              804
               ▼
┌─────────────────────────────────────────┐
│ Performing beamforming training          │
└─────────────────────────────────────────┘
               │
               ▼
┌─────────────────────────────────────────┐
│ Determining successful negotiation of    │
│ the TID-to-link mapping to the mmWave    │  805
│ link and mapping of at least one TID to  │
│ the mmWave link in the uplink direction  │
│ or the downlink direction                │
└─────────────────────────────────────────┘
               │
               ▼
┌─────────────────────────────────────────┐
│ Changing the link status of the mmWave   │  806
│ link to an enabled on usable status      │
└─────────────────────────────────────────┘
               │                              807
               ▼
┌─────────────────────────────────────────┐
│ Transmitting a frame over the mmWave link │
└─────────────────────────────────────────┘
```

Using a
default
mode

FIG. 8

Determining a link status of a mmWave
link as an enabled on usable status
701

Determining a link quality of the
mmWave link to be less than a first
threshold
702

Changing the link quality of the mmWave
link to an enabled on unusable status
703

Waiting for recovery of the mmWave link
704

Is the mmWave link
recovered?
705

Is the non-AP MLD
within a service
range of the AP
MLD?
708

False

Establishing a new
mmWave link, or
reestablishing the
mmWave link
709

False

True

Changing the link status of the mmWave
link the enabled on unusable status
710

True

Changing the link status of the mmWave
link to the enabled on usable status
706

(Re)performing (partial or complete)
beamforming training
711

Transmitting a frame over the mmWave
link
707

FIG. 9

In response to successful (re)association (beamforming training is or is not complete), the mmWave link using the default mode of the TID-to-link mapping

Completion of the beamforming training, (re)completion of the negotiation of the TID-to-link mapping, and at least one TID being mapped to the mmWave link in the uplink direction or the downlink direction

Enabled on usable status

Recovery of the link upon a first duration, or (re)performing of the beamforming training on the mmWave link

A link status being less than a first threshold

Incompletion of the beamforming training, (re)incompletion of the negotiation of the TID-to-link mapping, and/or no TID being mapped to the mmWave link in the uplink direction or the downlink direction

Enabled on unusable status

Enabled status

Disabled status

Successful (re)association (completion or incompletion of the beamforming training), and no TID being mapped to the mmWave link in the uplink direction and the downlink direction

Link setup or link resetup

Failing to receive, by the AP MLD, any frame from the non-AP MLD within a second duration, or transmitting, by the non-AP MLD, a disassociation frame to the original non-AP MLD

Reassociation of the non-AP MLD and a new AP MLD

FIG. 10

| Sub-element ID | Length | STA Control | STA Info | STA Profile |
|---|---|---|---|---|
| 1 | 1 | 2 | Variable | Variable |

Octets

| Link ID | Complete Profile | STA MAC Address Present | Beacon Interval Present | TSF Offset Present | BSS Parameters Change Count Present | mmWave AP STA Capabilities Information Present | Sector Sweep Parameters Present | Reserved |
|---|---|---|---|---|---|---|---|---|
| 1 | 1 | 1 | 2 | 1 | 1 | 1 | 1 | 4 |

Bits

FIG. 11

| Sub-element ID | Length | STA Control | STA Info | STA Profile |
|---|---|---|---|---|
| 1 | 1 | 2 | Variable | Variable |

Octets

| Link ID | STA MAC Address | Beacon Interval | TSF Offset | DTIM Info | BSS Parameters Change Count | mmWave AP STA Capabilities Information | Sector Sweep Parameters | Reserved |
|---|---|---|---|---|---|---|---|---|
| 1 | 0 or 6 | 0 or 2 | 0 or 8 | 0 or 2 | 0 or 1 | 0 or 2 | 0 or 2 | Variable |

Bits

FIG. 12

| Sub-element ID | Length | STA Control | STA Info | STA Profile |
|---|---|---|---|---|

Octets      1             1             2          Variable      Variable

| Link ID | STA MAC Address | Beacon Interval | TSF Offset | DTIM Info | BSS Parameters Change Count | mmWave AP STA Capabilities Information | Sector Sweep Parameters |
|---|---|---|---|---|---|---|---|

Bits    1      0 or 6      0 or 2      0 or 8     0 or 2      0 or 1              0 or 2                  0 or 4

| Max Associated mmWave STA Number | Power Source | Reserved |
|---|---|---|

Bits              8                    1         7

FIG. 13

| Sub-element ID | Length | STA Control | STA Info | STA Profile |
|---|---|---|---|---|

Octets      1             1             2          Variable      Variable

| Link ID | Complete Profile | STA MAC Address Present | Beacon Interval Present | TSF Offset Present | BSS Parameters Change Count Present | mmWave AP STA Capabilities Information Present | Sector Sweep Parameters Present | Reserved |
|---|---|---|---|---|---|---|---|---|

Bits    1       1            1             2            1              1                        1                          1             4

FIG. 14

| Element ID | Length | Element ID Extension | AP STA mmWave Capabilities Information |
|---|---|---|---|

Octets      1             1             1          2

| Max Associated mmWave STA Number | Power Source | Reserved |
|---|---|---|

Bits              8                    1         7

FIG. 15

| Element ID | Length | Element ID Extension | Non-AP STA mmWave Capabilities Information |
|---|---|---|---|

Octets    1       1       1       7

| Reverse Direction | Higher Layer Timer Synchronization | TPC | Number of RX mmWave Antennas | Fast Link Adaptation | Total Number of Sectors | RXSS Length | mmWave Antenna Reciprocity |
|---|---|---|---|---|---|---|---|

Bits   1     1     1     2     1     7     6     1

| ... | A-MPDU Parameters | BA with Flow Control | Supported MCS Set | Supported A-PPDU | Antenna Pattern Reciprocity | Grant Ack Supported | Reserved |
|---|---|---|---|---|---|---|---|

Bits    6     1     24     1     1     1     2

FIG. 16

   B0       B2    B3       B5

| Maximum A-MPDU Length Index | Minimum MPDU |
|---|---|

Bits     3        3

FIG. 17

| Sub-element ID | Length | STA Control | STA Info | STA Profile |
|---|---|---|---|---|

Octets   1     1     2     Variable     Variable

| Link ID | STA MAC Address | Beacon Interval | TSF Offset | DTIM Info | BSS Parameters Change Count | mmWave AP STA Capabilities Information | Sector Sweep Parameters | Reserved |
|---|---|---|---|---|---|---|---|---|

Bits   1   0 or 6   0 or 2   0 or 8   0 or 2   0 or 1   0 or 4   0 or 2   Variable

| Direction | CDOWN | Sector ID | Antenna ID | RX Length | Reserved |
|---|---|---|---|---|---|

Bits    1     9     6     4     6     6

FIG. 18

1701

| Performing multi-link discovery |
|---|

1703

| Performing multi-link (re)setup |
|---|

1705

| Changing the link status of the mmWave link |
|---|

FIG. 19

| Element ID | Length | Element ID Extension | Sector Sweep Parameters |
|---|---|---|---|

Octets      1          1          1          2

| Direction | CDOWN | Sector ID | Antenna ID | RX Length | Reserved |
|---|---|---|---|---|---|

Bits    1      9      6      4      6      6

FIG. 20

1950

| Generating module |
|---|

1970

| Parsing module |
|---|

1930

| Processing module |
|---|

1910

| Transmitting module |
|---|

1990

| Storing module |
|---|

FIG. 21

Wireless communication device 2000

| Processor | 2001
|---|

| Transmitter | 2003
|---|

2005

Bus

| Receiver | 2002
|---|

| Memory | 2004
|---|

FIG. 22

## INTERNATIONAL SEARCH REPORT

| International application No. |
| --- |
| **PCT/CN2023/088159** |

**A. CLASSIFICATION OF SUBJECT MATTER**

H04W24/08(2009.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 多链路, 毫米波, 波束, 赋形, 成形, 训练, 成功, 完成, 可用, 使能, 激活, 启用, 有效, multi+, link, MLD, mmW, beam, form+, train, succe+, complete, disable, enable, activ+, valid

**C. DOCUMENTS CONSIDERED TO BE RELEVANT**

| Category* | Citation of document, with indication, where appropriate, of the relevant passages | Relevant to claim No. |
| --- | --- | --- |
| X | US 2022159555 A1 (INTEL CORP.) 19 May 2022 (2022-05-19) description, paragraph 248 | 1-82 |
| A | CN 115769628 A (INTEL CORP.) 07 March 2023 (2023-03-07) entire document | 1-82 |
| A | US 11336487 B1 (HEWLETT PACKARD ENTERPRISE DEVELOPMENT LP) 17 May 2022 (2022-05-17) entire document | 1-82 |
| A | US 2022116862 A1 (INTEL CORP.) 14 April 2022 (2022-04-14) entire document | 1-82 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 December 2023** | **13 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/088159**

| Patent document cited in search report | | | Publication date (day/month/year) | Patent family member(s) | | | Publication date (day/month/year) |
|---|---|---|---|---|---|---|---|
| US | 2022159555 | A1 | 19 May 2022 | CN | 116347613 | A | 27 June 2023 |
| CN | 115769628 | A | 07 March 2023 | WO | 2022026527 | A1 | 03 February 2022 |
| | | | | EP | 4190020 | A1 | 07 June 2023 |
| US | 11336487 | B1 | 17 May 2022 | DE | 102021127238 | A1 | 03 November 2022 |
| | | | | CN | 115278723 | A | 01 November 2022 |
| US | 2022116862 | A1 | 14 April 2022 | DE | 102022121563 | A1 | 30 March 2023 |

Form PCT/ISA/210 (patent family annex) (July 2022)